(19) Europäisches Patentamt
European Patent Office
Office européen des brevets

(11) EP 4 546 883 A1

(12) **EUROPEAN PATENT APPLICATION**
published in accordance with Art. 153(4) EPC

(43) Date of publication:
**30.04.2025 Bulletin 2025/18**

(21) Application number: **23829970.5**

(22) Date of filing: **14.06.2023**

(51) International Patent Classification (IPC):
***H04W 52/02*** *(2009.01)*

(52) Cooperative Patent Classification (CPC):
**H04W 52/02; H04W 72/1263; H04W 72/542;**
Y02D 30/70

(86) International application number:
**PCT/CN2023/100242**

(87) International publication number:
**WO 2024/001788 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.06.2022 CN 202210734436**

(71) Applicant: **ZTE Corporation**
**Shenzhen, Guangdong 518057 (CN)**

(72) Inventors:
- **WANG, Zisheng**
  **Shenzhen, Guangdong 518057 (CN)**
- **LI, Yun**
  **Shenzhen, Guangdong 518057 (CN)**
- **HUANG, Qisheng**
  **Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

# (54) WIRELESS SENSING METHOD, AND ELECTRONIC DEVICE AND STORAGE MEDIUM

(57) Disclosed in the embodiments of the present application are a wireless sensing method, and an electronic device and a storage medium, wherein an access point device is in communication connection with a plurality of trigger devices. The method, which is applied to the access point device, comprises: respectively receiving sensing messages, which are sent by a plurality of trigger devices (S101); according to the sensing messages, obtaining channel state information of a corresponding trigger device (S102); according to the channel state information, determining whether there is a target object within the coverage range of the corresponding trigger device, so as to obtain a channel determination result (S103); and according to the channel determination result, sending configuration information to the trigger device, such that the trigger device adjusts the working state of sending the sensing message (S104).

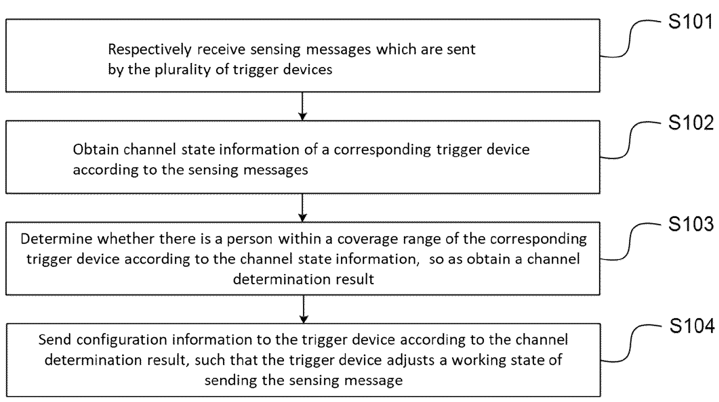


FIG.3



EP 4 546 883 A1

## Description

CROSS-REFERENCE TO RELATED APPLICATIONS

The present application is proposed based on and claims the priority of the Chinese patent application No. 202210734436.8, filed on June 27, 2022, the entire contents of which are incorporated herein by reference.

TECHNICAL FIELD

The present application relates to, but is not limited to, the technical field of communications, in particular to a wireless sensing method, an electronic device and a storage medium.

BACKGROUND

Wireless sensing utilizes a covered WiFi signal to sense a human body and an environment, which may also be called WiFi sensing, and is a technology that utilizes a wireless local area network (WLAN) signal to identify a target object that is within a coverage range. This target object may usually be but not limited to a human being, and may further be other animals, objects, etc. that need to be sensed and identified.

In some cases, when a behavior of a user is sensed by a wireless sensing system, a trigger device sends a message to an access point device, and in a process of the trigger device continuously sending a message to the access point device, there is a problem of occupying radio resources of a system, thereby reducing a capability and efficiency of wireless sensing.

SUMMARY

Embodiments of the present application provide a wireless sensing method, an electronic device and a storage medium.

In a first aspect, an embodiment of the present application provides a wireless sensing method, applied to an access point device. The access point device is in communication connection with a plurality of trigger devices. The method includes: respectively receiving sensing messages which are sent by the plurality of trigger devices; obtaining, according to the sensing messages, channel state information of a corresponding trigger device; determining, according to the channel state information, whether there is a target object within a coverage range of the corresponding trigger device, so as obtain a channel determination result; and sending, according to the channel determination result, configuration information to the trigger device, such that the trigger device adjusts a working state of sending the sensing message.

In a second aspect, an embodiment of the present application provides a wireless sensing method, applied to a trigger device. The trigger device is in communication connection with an access point device. The method includes: sending a sensing message to the access point device, such that the access point device obtains corresponding channel state information according to the sensing message, and determines whether there is a target object within a coverage range of the corresponding trigger device according to the channel state information, and obtains a channel determination result, and the access point device then obtains configuration information according to the channel determination result; and receiving the configuration information sent by the access point device, and adjusting a working state of sending the sensing message according to the configuration information.

In a third aspect, an embodiment of the present application provides an electronic device, including a memory and a processor. The memory stores a computer program, and the processor, when executing the computer program, implements the wireless sensing method according to any one of the embodiments of the first aspect and the embodiments of the second aspect of the present application.

In a fourth aspect, an embodiment of the present application provides a computer readable storage medium, storing a program. The program is executed by a processor to implement the wireless sensing method according to any one of the embodiments of the first aspect and the embodiments of the second aspect of the present application.

BRIEF DESCRIPTION OF DRAWINGS

FIG. 1 is a schematic diagram of an application scenario of a wireless sensing method provided by an embodiment of the present application.

FIG. 2 is a schematic diagram of an application scenario of a wireless sensing method provided by another embodiment of the present application.

FIG. 3 is a schematic flowchart of a wireless sensing method provided by an embodiment of the present application.
FIG. 4 is a schematic flowchart of a wireless sensing method provided by another embodiment of the present application.
FIG. 5 is a schematic flowchart of a wireless sensing method provided by another embodiment of the present application.
FIG. 6 is a schematic flowchart of a wireless sensing method provided by another embodiment of the present application.
FIG. 7 is a schematic flowchart of a wireless sensing method provided by another embodiment of the present application.
FIG. 8 is a schematic flowchart of a wireless sensing method provided by another embodiment of the present application.
FIG. 9 is a schematic flowchart of a wireless sensing method provided by another embodiment of the present application.
FIG. 10 is a schematic flowchart of a wireless sensing method provided by another embodiment of the present application.
FIG. 11 is a schematic flowchart of a wireless sensing method provided by another embodiment of the present application.
FIG. 12 is a schematic flowchart of a wireless sensing method provided by another embodiment of the present application.
FIG. 13 is a schematic flowchart of a wireless sensing method provided by another embodiment of the present application.
FIG. 14 is a schematic flowchart of a wireless sensing method provided by another embodiment of the present application.
FIG. 15 is a schematic flowchart of a wireless sensing method provided by another embodiment of the present application.
FIG. 16 is a schematic flowchart of a wireless sensing method provided by another embodiment of the present application.
FIG. 17 is a schematic diagram of an electronic device provided by an embodiment of the present application.

## DETAILED DESCRIPTION

In order to make objectives, technical solutions and advantages of the present application more clear and understandable, the present application is illustrated in detail below in conjunction with accompanying drawings and embodiments. It should be understood that the specific embodiments described herein are only used to explain the present application and are not used to limit the present application.

In the description of the present application, it needs to be understood that involving orientation descriptions, orientation or positional relationships indicated by upper, lower, front, back, left, right, etc. are orientation or positional relationships shown based on the accompanying drawings, are only for the convenience of describing the present application and simplifying the description, rather than indicating or implying that an apparatus or element referred to must have a specific orientation and be constructed and operated in a specific orientation, and thus cannot be understood as a limitation of the embodiments of the present application.

It should be understood that in the description of the embodiments of the present application, several means more than one, a plurality means more than two, greater than, less than, over, etc. are understood as excluding the present number, and above, below, within, etc. are understood as including the present number. If there are descriptions of "first", "second", etc., they are used only for the purpose of distinguishing technical features, and cannot be construed as indicating or implying relative importance or implicitly specifying the quantity of indicated technical features or implicitly specifying the sequence of indicated technical features.

In the descriptions of the embodiments of the present application, unless otherwise expressly limited, words such as arrangement, installation, and connection shall be broadly construed, and those of skill in the art may reasonably determine specific meanings of the above words in the embodiments of the present application in conjunction with specific contents of the technical solutions.

Wireless sensing, or WiFi sensing, is a technology that utilizes a WLAN signal to identify an action of a user that is within a coverage range. A main working principle thereof is that an access point device estimates a wireless channel each time it receives a signal so as to improve a wireless performance. An estimation result of the wireless channel is called channel state information (CSI). Wireless channel characteristics are affected by a position and characteristics of an object between transceiving antennae, so that different actions and positions of the user produce different wireless channel characteristics, i.e., different CSI. Therefore, a WLAN device may analyze the CSI to obtain the actions, positions, or other information of the user.

In some cases, a single frequency trigger device is usually adopted to trigger and collect sensing signals, and this wireless sensing mode has a disadvantage of occupying radio resources. The applicant has found that the trigger device sends a message to an access point device, and in a process of the trigger device continuously sending the message to the access point device, there is a problem of occupying radio resources of a system, thereby reducing a capability and efficiency of wireless sensing.

On such basis, embodiments of the present application provide a wireless sensing method, an electronic device and a storage medium. The wireless sensing method is an algorithm that improves wireless sensing. The wireless sensing method may be applied to an access point device or a trigger device, such that the trigger device may adjust a working state of sending a sensing message according to configuration information. After adjusting the working state of sending the sensing message, the trigger device may reduce the occupation of radio resources. The trigger device may send the sensing message according to whether there is a target object within a coverage range. Since all trigger devices are not sending messages all the time, radio resources occupied by them are low, thus realizing reasonable planning and scheduling of the plurality of trigger devices, and then effectively improving the capability and efficiency of wireless sensing. In addition, by arranging high-frequency trigger devices and low-frequency trigger devices, reasonable planning and scheduling of multi-frequency trigger devices are realized, which realizes a wider range of coverage compared to adopting only a single frequency-band trigger device, and the performance of the sensing algorithm will also be improved as a bandwidth is increased. In the embodiments of the present application, the bandwidth is dynamically increased when the target object is found to be at a proximal end, which may help to improve the performance of the sensing algorithm in a case of minimizing the occupation of the radio resources. Not only that, under the same power, a coverage range increases as a frequency decreases, so a coverage range of a lower-frequency trigger device is greater than that of a higher-frequency trigger device, and the method of the embodiments of the present application may improve the coverage of the sensing algorithm.

Communication connection may be realized between the access point device and the trigger devices in the embodiments of the present application. The access point device is a WLAN device and also a wireless access point (i.e., a wireless AP or WAP), which is equivalent to a bridge connecting a wired network and a wireless network, and which can add a wireless function to the existing wired network by bridging traffic from the wireless network to the wired network. One trigger device is any device that may send a message. For example, the trigger device may be user equipment, and one access point may serve one or more pieces of user equipment at the same time. These pieces of user equipment are in the form of, but not limited to, a mobile phone, an Internet of Things terminal, or another access point device, etc. The communication between the access point device and the trigger device is based on, but not limited to, the 802.11 family of protocols.

As shown in FIG. 1, an access point device may be in communication connection with a plurality of trigger devices, each trigger device sends a message to the access point device respectively, and the access point device, after receiving the messages, may perform channel estimations on the messages to obtain channel state information of each trigger device. The embodiment of the present application describes the above messages for the channel estimations as sensing messages, and each trigger device may send one sensing message to the access point device at regular intervals.

As shown in FIG. 2, trigger devices may include a low-frequency trigger device and a high-frequency trigger device, and an access point device provides network access while not less than two of the trigger devices are connected with the access point device. The low-frequency trigger devices and the high-frequency trigger devices work in different frequency bands, wherein a straight-line distance of an antenna of each low-frequency trigger device with a lower working frequency relative to an antenna of the access point device is greater than or equal to a distance of an antenna of each high-frequency trigger device with a higher working frequency relative to the antenna of the access point device. The low-frequency trigger devices and the high-frequency trigger devices may send sensing messages to the access point device at regular intervals. The low-frequency trigger devices and the high-frequency trigger devices may also be an 802.11 device that can work in two frequency bands at the same time, and at this time, a low frequency and a high frequency are defined in terms of a frequency at which the trigger device is actually working. It may be understood that there may be a plurality of low-frequency trigger devices and a plurality of high-frequency trigger devices, which is not specifically limited herein.

It needs to be noted that the low-frequency trigger devices and the high-frequency trigger devices in the embodiment of the present application are relative in frequency, and the working frequencies of the low-frequency trigger devices are lower than those of the high-frequency trigger devices. For example, in an embodiment, a low-frequency trigger device is a 2.4G trigger device, a high-frequency trigger device is a 5G trigger device, and the high-frequency trigger device may further be a higher-frequency device such as a 6G trigger device. Under the premise of meeting requirements of the embodiment of the present application, the low-frequency trigger devices and the high-frequency trigger devices may further be devices of other frequencies, and only 2.4G and 5G are used as examples herein for illustration.

Detailed illustrations are given below.

An embodiment of the present application provides a wireless sensing method, applied to an access point device, applicable to any WLAN access point device that meets a WiFi5 standard, and the access point device is not repeated herein. Referring to FIG. 3, the wireless sensing method in the embodiment of the present application includes, but is not limited to, steps S101 to S104.

At step S101, sensing messages which are sent by a plurality of trigger devices, are respectively received.

At step S102, according to the sensing messages, channel state information of a corresponding trigger device is obtained.

At step S103, according to the channel state information, whether there is a target object within a coverage range of the corresponding trigger device is determined, so as obtain a channel determination result.

At step S104, according to the channel determination result, configuration information is sent to the trigger device, such that the trigger device adjusts a working state of sending the sensing message.

In an embodiment, the access point device is in communication connection with a plurality of trigger devices, the trigger devices may send sensing messages to the access point device, and the access point device, after receiving the sensing messages, obtains the channel state information of the corresponding trigger devices respectively according to the sensing messages, and may determine a behavior of a user within the signal coverage area of the corresponding trigger device through the channel state information. In the embodiment of the present application, according to the channel state information, whether there is the target object within the coverage range of the corresponding trigger device may be determined, so as obtain the channel determination result. In some embodiments, there are two channel determination results, including a result that there is the target object within the coverage range of the corresponding trigger device, or a result that there is no target object within the coverage range of the corresponding trigger device. According to these two results, the access point device may obtain the configuration information and send the configuration information to the trigger device, and the trigger device may control itself after receiving the configuration information and adjust the working state of the trigger device itself of sending the sensing message.

It may be understood that in adjusting, by the trigger device, the working state of sending the sensing message, the trigger device may adjust whether to send the sensing message, or adjust a frequency of sending the sensing message, and may further adjust a frequency band or the information amount of the sent sensing message, such that the trigger device may perform the adjustment according to whether there is the target object within the coverage range.

According to the embodiment of the present application, after adjusting the working state of sending the sensing message, the trigger device may reduce the occupation of radio resources. The trigger device may adjust the working state of sending the sensing message according to whether there is the target object within the coverage range, thus realizing reasonable planning and scheduling of the plurality of trigger devices, and then effectively improving the capability and efficiency of wireless sensing.

It may be understood that for the trigger device with the coverage range where there is the target object, the embodiment of the present application may improve its sensing performance, and for the trigger device with the coverage range where there is no target object, the embodiment of the present application may reduce its sensing performance, thus reducing the occupation of the radio resources, and improving the capability and efficiency of wireless sensing.

Referring to FIG. 4, in an embodiment, trigger devices are configured to send sensing messages at intervals according to a preset time cycle, and the above step S103 may further include, but is not limited to, step S201 to step S202.

At step S201, sequence information is formed according to a plurality of pieces of the channel state information of each trigger device in a plurality of the time cycles.

At step S202, according to the sequence information, whether there is the target object within the coverage range of the corresponding trigger device is determined, so as obtain the channel determination result.

In an embodiment, the trigger devices send sensing messages at intervals according to a preset time cycle, and for a certain trigger device, it sends the sensing message to the access point device at a first moment, and sends the sensing message to the access point device at a second moment after time reaches the preset time cycle. The number of times that the trigger device sends the sensing message cyclically may be set in advance, i.e., the number of time cycles in which the trigger device sends the sensing message may be limited in advance, and within these plurality of time cycles, the access point device may obtain a plurality of pieces of corresponding channel state information according to the sensing message sent by each trigger device and form sequence information according to the plurality of pieces of channel state information. It may be understood that the sequence information is specific to a certain trigger device, the sequence information is a set of a plurality of pieces of channel state information obtained from the sensing messages sent by the trigger device in a plurality of cumulative time cycles, and the access point device may determine, according to the sequence information, whether there is a target object within the coverage range of the corresponding trigger device, so as to obtain the channel determination result. When there is a plurality of trigger devices that need to be processed, the access point device may obtain sequence information of the plurality of different trigger devices.

It may be understood that in the embodiment of the present application, the access point device obtains a channel state result through calculation by means of the sequence information, realizing the determination according to the channel state information of the trigger device in a plurality of different time cycles. For example, when there are three time cycles, i.e., the trigger device sends three sensing messages to the access point device in three consecutive time cycles, whose moments of sending are a first moment, a second moment, and a third moment, and time intervals between every two of the first moment, the second moment, and the third moment are the same, and all are equal to the size of the time cycles. The access point device may obtain sequence information of the trigger device according to three pieces of channel state information obtained at the first moment, the second moment, and the third moment, and perform processing based on these three pieces of channel state information in the sequence information, so that whether there is a target object within the coverage range of the corresponding trigger device may be known, so as to obtain a channel determination result.

It may be understood that the access point device may perform processing according to the plurality of pieces of channel state information in the sequence information so as to obtain the desired channel determination result. The access point device may assign corresponding weights to the plurality of pieces of channel state information and obtain the desired channel determination result by weighted calculation according to the channel state information after the assignment of the weights, or, may input the plurality of pieces of channel state information into a preset processing model, which may be a neural network model or a mathematical model, so as to obtain the desired channel determination result by calculation, which is not specifically limited herein.

Referring to FIG. 5, in an embodiment, prior to the above step S202, the method may further include, but is not limited to, step S301 to step S302.

At step S301, a message time interval between the pieces of channel state information in the sequence information is obtained.

At step S302, upon the condition that the magnitude of the message time interval does not correspond to the magnitude of the time cycle, an interpolation operation is performed on the sequence information, such that the magnitude of the message time interval after interpolation corresponds to the magnitude of the time cycle.

In an embodiment, after a plurality of time cycles, due to blocking of radio or other reasons, there may be missing sensing messages received by the access point device and sent by each trigger device, and the number of sensing messages may not be the same as the number of the time cycles, or the message time intervals between the pieces of channel state information in the sequence information are not uniform. To solve this problem, the access point device performs an interpolation on the sequence information of each trigger device, i.e., performs an interpolation on the channel state information in the sequence information, so that the non-uniformity of the received messages due to radio competition is avoided.

In some embodiments, the access point device may obtain message time interval between the pieces of channel state information in sequence information and determine the message time intervals. Upon the condition that a magnitude of the message time interval does not correspond to a magnitude of the time cycle, an interpolation operation is performed on the sequence information, such that the magnitude of the message time interval after interpolation corresponds to the magnitude of the time cycle.

For example, when message time corresponding to respective channel state information in the sequence information is 1 second, 2 seconds, 3.2 seconds, and 4 seconds respectively, the size of the time cycle is 1 second, at this time there should be a piece of corresponding channel state information when the time is 3 seconds, but due to the blocking of radio or other reasons, the message time becomes 3.2 seconds. Thus the embodiment of the present application may perform an interpolation on the channel state information on the 3-second time, such that the message time corresponding to the respective channel state information in the sequence information after the interpolation are 1 second, 2 seconds, 3 seconds, and 4 seconds respectively.

For another example, when message time corresponding to respective channel state information in the sequence information is 1 second, 2 seconds, and 4 seconds respectively, the size of the time cycle is 1 second, at this time there should be a piece of corresponding channel state information when the time is 3 seconds, but due to the blocking of radio or other reasons, one is missing for time periods between 2 seconds and 4 seconds. Thus the embodiment of the present application may perform an interpolation on the channel state information on the 3-second time, such that the message time corresponding to the respective channel state information in the sequence information after the interpolation are 1 second, 2 seconds, 3 seconds, and 4 seconds respectively.

Referring to FIG. 6, in an embodiment, the above step S302 may further include, but is not limited to, step S401 to step S404.

At step S401, standard time of target channel state information to be interpolated is obtained.

At step S402, an inverse distance weight configuration is performed on channel state information not at the standard time in sequence information, a weighted average calculation is performed on the channel state information of different weights, the target channel state information is obtained, and the target channel state information is interpolated into the sequence information.

At step S403, or, a plurality of pieces of channel state information prior to the standard time in the sequence information are obtained, a weighted average calculation is performed on the plurality of pieces of channel state information, the target channel state information is obtained, and the target channel state information is interpolated into the sequence information.

At step S404, or, channel state information corresponding to the standard time at a time interval in the sequence information is obtained, the channel state information is used as target channel state information after interpolation, and the target channel state information is interpolated into the sequence information.

In an embodiment, an interpolation may be performed according to different ways in the embodiment of the present application. For example, in the embodiment of the present application, the time at which each sensing message is sent is defined as standard time, the standard time is related to a corresponding trigger device and a corresponding time cycle, and for the same trigger device, the time interval between two adjacent pieces of standard time is equal to the size of the time cycle. In the process of interpolation, the access point device first obtains standard time of target channel state information to be interpolated. For example, in the above embodiment, when the message time corresponding to respective channel state information in the sequence information is 1 second, 2 seconds, 3.2 seconds, and 4 seconds respectively, the size of the time cycle is 1 second. At this time, there should be a piece of corresponding channel state information when the time is 3 seconds, 3 seconds is the standard time of the corresponding target channel state information, and the access point device needs to interpolate a piece of channel state information to the standard time of 3 seconds as the target state information.

For example, the embodiment of the present application may perform an interpolation by inverse distance weighting. The channel state information received at the standard time of the target channel state information is a weighted average of the channel state information at other time. Through the inverse distance weighting configuration, the further away from the above standard time, the smaller the weight, and vice versa, the closer to the above standard time, the larger the weight. A weighted average calculation is performed on the channel state information of different weights, the target channel state information is obtained, and the target channel state information is interpolated into the sequence information.

In addition, the embodiment of the present application may perform a plurality of spline interpolations, in which the target channel state information at the standard time is obtained by weighted average processing of a plurality of pieces of channel state information prior to it. The access point device may obtain a plurality of pieces of channel state information prior to the standard time in the sequence information, perform a weighted average calculation on the plurality of pieces of channel state information, obtain the target channel state information, and interpolate the target channel state information into the sequence information. For example, the embodiment of the present application may obtain three pieces of channel state information prior to the standard time, and assign corresponding weights to the three pieces of channel state information. For example, the three pieces of channel state information may be set to have the same weight, or, the channel state information closer to the standard time is set to have a larger weight, which is not specifically limited herein, and the desired target channel state information may be obtained by performing a weighted average calculation on the three pieces of channel state information after assigning the weights.

In addition, the embodiment of the present application may further obtain channel state information at a time interval corresponding to the standard time in the sequence information, use the channel state information as target channel state information after interpolation, and interpolate the target channel state information into the sequence information, and the time interval may be set in advance. For example, the time interval is set as a shortest time interval prior to the standard time, or a shortest time interval after the standard time, which realizes obtaining the channel state information closest to the standard time as the target channel state information.

Referring to FIG. 7, in an embodiment, the above step S202 may further include, but is not limited to, step S501 to step S502.

At step S501, a covariance matrix of the sequence information is calculated, and according to whether a diagonal element of a covariance is greater than a threshold value, whether there is a target object within the coverage range of the corresponding trigger device is determined, so as obtain the channel determination result.

At step S502, or, the sequence information is input into a pre-trained neural network model, an output result of the neural network model is obtained, and whether there is the target object within the coverage range of the corresponding trigger device is determined according to the output result, so as obtain the channel determination result.

In an embodiment, the embodiment of the present application may obtain the channel determination result by calculating in various ways. For example, in the embodiment of the present application, the covariance matrix of the plurality of pieces of channel state information in the sequence information may be calculated by calculating the covariance matrix of the sequence information, and when the covariance has a diagonal element greater than a threshold value $\tau$, then it is considered that there is a target object within the coverage range of the corresponding trigger device, so as to obtain the channel determination result representing that there is a person within the coverage range of the corresponding trigger device. Or, when the covariance has a diagonal element smaller than the threshold value $\tau$, then it is considered that there is no target object within the coverage range of the corresponding trigger device, so as to obtain the channel determination result representing that there is no person within the coverage range of the corresponding trigger device.

For another example, the embodiment of the present application may further obtain the channel determination result according to a preset neural network model. In some embodiments, the sequence information may be input into a pre-trained neural network model, i.e., the plurality of pieces of channel state information are input into the pre-trained neural network model, the neural network model processes the input data, and an output result of the neural network model may be output. According to the output result, whether there is the target object within the coverage range of the corresponding trigger device may be determined, so as obtain the channel determination result. It may be understood that the neural network model may be obtained in advance after training and optimization with the channel determination results in a sample according to the plurality of pieces of sample sequence information or the plurality of pieces of sample channel state information in the sample, which is not specifically limited herein.

It may be understood that when there is a plurality of trigger devices, the access point device may perform calculations on the plurality of trigger devices respectively, thereby obtaining the channel determination result of each trigger device.

In an embodiment, the trigger devices include low-frequency trigger devices and high-frequency trigger devices, and the low-frequency trigger devices and the high-frequency trigger devices are all configured to send the sensing messages to the access point device.

It needs to be noted that the trigger devices are divided into the low-frequency trigger devices and the high-frequency trigger devices in the embodiment of the present application, and frequencies between the low-frequency trigger devices and the high-frequency trigger devices are different. As shown in FIG. 2, in the embodiment of the present application, one access point device may be arranged to provide network access while not less than two trigger devices are connected with the access point device. The low-frequency trigger devices and the high-frequency trigger devices work in different frequency bands, wherein a straight-line distance of an antenna of each low-frequency trigger device with a lower working frequency relative to an antenna of the access point device is greater than or equal to a distance of an antenna of each high-frequency trigger device with a higher working frequency relative to the antenna of the access point device. The low-frequency trigger devices and the high-frequency trigger devices may send sensing messages to the access point device at regular intervals. The low-frequency trigger devices and the high-frequency trigger devices may also be an 802.11 device that can work in two frequency bands at the same time, and at this time, a low frequency and a high frequency are defined in terms of a frequency at which the trigger device is actually working. It may be understood that there may be a plurality of low-frequency trigger devices and a plurality of high-frequency trigger devices, which is not specifically limited herein.

It may be understood that the coverage range of a low-frequency trigger device is higher than that of a high-frequency trigger device, and under the same power, the coverage range of wireless sensing increases as a frequency decreases, so the coverage range of a lower-frequency trigger device is greater than that of a higher-frequency trigger device. The embodiment of the present application adopts a lower-frequency link to increase coverage when the user is located at a far end, and adopts a higher-frequency link to improve an identification performance when the user is located at a near end. Through reasonable planning and scheduling of multi-frequency trigger devices, the performance of the sensing algorithm may be improved and the coverage of the sensing algorithm may be improved compared to only adopting a single-frequency-band trigger device.

It needs to be noted that in the embodiment of the present application, a plurality of links simultaneously perform transceiving by means of the low-frequency trigger devices and the high-frequency trigger devices, while ensuring high precision and high coverage of wireless sensing.

Referring to FIG. 8, in an embodiment, the above step S104 may further include, but is not limited to, step S601 to step S603.

At step S601, according to channel determination results of high-frequency trigger devices, configuration information is sent to the high-frequency trigger devices, such that the high-frequency trigger devices adjust working states of sending sensing messages.

At step S602, according to channel determination results of the high-frequency trigger devices, whether to adjust working states of sending sensing messages of low-frequency trigger devices is determined.

At step S603, in response to determining to adjust the working states of sending the sensing messages of the low-frequency trigger devices, according to channel determination results of the low-frequency trigger devices, configuration information is sent to the low-frequency trigger devices, such that the low-frequency trigger devices adjust the working states of sending the sensing messages.

In an embodiment, the high-frequency trigger device is arranged at the near end close to the access point device, so that in the embodiment of the present application, for a channel determination result of the high-frequency trigger device, configuration information is sent to the high-frequency trigger device, such that the high-frequency trigger device adjusts a working state of sending a sensing message. Subsequently, whether to adjust a working state of a far-end low-frequency trigger device of sending a sensing message needs to be determined. In the embodiment of the present application, according to a channel determination result of the high-frequency trigger device, whether to adjust the working state of sending the sensing message of the low-frequency trigger device is determined. When a determination result represents yes, according to a channel determination result of the low-frequency trigger device, configuration information is sent to the low-frequency trigger device, such that the low-frequency trigger device adjusts the working state of sending the sensing message.

It may be understood that the wireless sensing method in the embodiment of the present application first adjusts the high-frequency trigger device at the near end, and then determines whether the low-frequency trigger device at the far end needs to be adjusted according to the channel determination result in the high-frequency trigger device. Through such an adjustment mode, in the embodiment of the present application, when the target object is found to be at the near end, priority is given to improving a sensing capability of the near-end high-frequency trigger device, and then according to the actual situation of the near-end medium and high-frequency trigger device, whether to adjust the far-end low-frequency trigger device is determined. After a determined result is obtained, a algorithmic coverage capability of the near end and far end is then simultaneously improved by adjusting the low-frequency trigger device at the far end.

In an embodiment, the embodiment of the present application determines, according to a channel determination result of the high-frequency trigger device, whether to adjust the working state of the low-frequency trigger device of sending the sensing message. The channel determination result of the high-frequency trigger device includes that there is a target object within the coverage range of the corresponding high-frequency trigger device, or that there is no target object. When there is a high-frequency trigger device with a coverage range where there is a target object at the near end, or when the number of high-frequency trigger devices with coverage ranges where there are target objects is high, it may be determined that the low-frequency trigger device is not adjusted, and at this time, priority is given to improving the sensing capability of the high-frequency trigger device at the near end. When there is no high-frequency trigger device with a coverage range where there is a target object at the near end, or when the number of high-frequency trigger devices with coverage ranges where there are target objects is low, it may be determined that the low-frequency trigger device is adjusted, and at this time, priority is given to improving the sensing capability of the high-frequency trigger device at the near end, thus realizing the determination of whether to adjust the low-frequency trigger device according to the channel determination result of the high-frequency trigger device.

It may be understood that in the embodiment of the present application, the sensing messages of the low-frequency trigger device and the high-frequency trigger device are collected in various time cycles. In processing the sensing message to determine whether to adjust the working state of sending the sensing message of the low-frequency trigger device according to whether there is a person within its coverage area, the sensing message of the high-frequency trigger device is first processed, and a determination is performed. When conditions that meet the adjustment of the working state of sending the sensing message of the low-frequency trigger device are reached, the sensing message of the low-frequency trigger device is processed, thus reducing the calculation and processing pressure of the device, improving the planning and scheduling capability of the wireless sensing, improving the running efficiency of the device, and effectively improving the sensing capability and efficiency.

Referring to FIG. 9, in an embodiment, the above step S602 may further include, but is not limited to, step S701 to step S702.

At step S701, upon the condition that the channel determination results of all the high-frequency trigger devices represent that there is no target object within the coverage range, it is determined to adjust the working states of sending the sensing messages of the low-frequency trigger devices.

At step S702, upon the condition that the channel determination results of the high-frequency trigger devices represent that there are target objects within the coverage ranges, it is determined not to adjust the working states of sending the sensing messages of the low-frequency trigger devices, or, whether to adjust the working states of sending the sensing messages of the low-frequency trigger devices is determined according to a number of the high-frequency trigger devices with a target object within the coverage range.

In an embodiment, the embodiment of the present application determines, according to channel determination results of the high-frequency trigger devices, whether to adjust the working states of sending the sensing messages of the low-frequency trigger devices. In some embodiments, upon the condition that the channel determination results of all the high-frequency trigger devices represent that there is no target object within the coverage range, it is determined to adjust the working states of sending the sensing messages of the low-frequency trigger devices. At this time, it indicates that there is no target object within the coverage ranges of the near-end high-frequency trigger devices, and there is no need to improve the sensing capabilities of the near-end high-frequency trigger devices, so the adjustment of the far-end low-frequency trigger devices may be determined.

In addition, upon the condition that the channel determination results of the high-frequency trigger devices represent that there is a target object within the coverage range, conditions may be set in advance to determine whether to adjust the low-frequency trigger devices at the far end. In some embodiments, it may be that once there is a high-frequency trigger device with a coverage range where there is a target object, the low-frequency trigger devices at the far end are no longer adjusted, so as to meet the prioritization of near-end sensing capability and efficiency improvement in case of certain needs. Not only that, a condition of determination may further be determining whether to adjust the working states of sending the sensing messages of the low-frequency trigger devices according to the number of high-frequency trigger devices with the coverage ranges where there are target objects. For example, when the access point device presets a first quantity threshold for determining whether to adjust working states of the far-end low-frequency trigger devices of sending the sensing messages, When the number of high-frequency trigger devices with the coverage ranges where there are target objects is less than a first quantity threshold, it indicates that the number of high-frequency trigger devices needing to be adjusted at the near end is within a controllable range, then the adjustment of the far-end low-frequency trigger devices does not affect the occupation of the radio resources, and therefore it is determined that the working states of sending the sensing messages of the low-frequency trigger devices may be adjusted. When the number of high-frequency trigger devices with the coverage ranges where there are target objects is greater than the first quantity threshold, it indicates that improving the sensing performance of the near-end high-frequency trigger devices, and then improving the sensing performance of the far-end low-frequency trigger devices will affect a sensing capability of the whole system, so the far-end low-frequency trigger devices are no longer adjusted.

Referring to FIG. 10, in an embodiment, the above step S104 may further include, but is not limited to, step S801 to step S802.

At step S801, according to the channel determination result, the trigger device with the coverage range where there is the target object is determined, and first configuration information is sent to the trigger device with the coverage range where there is the target object, such that the trigger device increases the information amount of sending the sensing message.

At step S802, or, according to the channel determination result, the trigger device with the coverage range where there is no target object is determined, second configuration information is sent to the trigger device with the coverage range where there is no target object, such that the trigger device reduces or stops sending the sensing message.

In an embodiment, in the process of adjusting the working states of the trigger devices of sending the sensing messages, when the channel determination results of the trigger devices determine that there are target objects within the coverage ranges, the access point device sends the first configuration information to the trigger devices with the coverage ranges where there are the target objects, such that theses trigger devices increase the information amount of sending the sensing messages, thus, sensing performances of these trigger devices are improved, and increasing the information amount of the channel state information helps to analyze and obtain actions of users in the coverage ranges. Whereas, for the trigger devices whose channel determination results determine that there is no target object within the coverage ranges, according to the channel determination result, the access point device sends second configuration information to the trigger devices with the coverage ranges where there are no target objects, such that theses trigger devices reduce or stop sending the sensing messages. For this type of trigger devices, there is no target object within their coverage ranges, and continuing to send sensing messages will occupy the radio resources, resulting in the reduction of the performance of wireless sensing, so allowing this type of trigger devices to reduce or stop sending sensing messages may effectively reduce its occupation of the radio resources.

In an embodiment, prior to the above step S101, the method may further include, but is not limited to, the following step.

Initial configuration information is respectively sent to the plurality of trigger devices, such that the trigger devices, after receiving the initial configuration information, configure working frequency bands of the trigger devices as first working frequency bands.

In addition, the above step 801 may further include, but is not limited to, the following step.

The first configuration information is sent to the trigger devices with the coverage ranges where there are the target objects, such that the trigger devices raise the working frequency bands from the first working frequency bands to second working frequency bands.

In an embodiment, the embodiment of the present application sends the initial configuration information to all the trigger devices prior to executing the wireless sensing method, such that the trigger devices, after receiving the initial configuration information, configure their own working frequency bands as the first working frequency bands. It may be understood that the first working frequency band is a lower working frequency band, and working under this frequency band may save the power of the trigger devices and reduce the occupation of radio. When the type of trigger devices with the coverage ranges where there are the target objects are adjusted, the access point device may send the first configuration information to them, such that the trigger devices, after receiving the first configuration information, raise the working frequency bands from the first working frequency bands to second working frequency bands.

For example, the embodiment of the present application initially configures all trigger devices to work in a working frequency band of 20 MHz by default by sending the initial configuration information, so as to save the power of the trigger devices and to reduce the occupation of radio. It may be understood that for 2.4 G trigger devices, their working frequency bands may be 20 MHz or 40 MHz, and for 5G trigger devices, their working frequency bands may be 20 MHz, 40 MHz or 80 MHz. It may be understood that the trigger devices may further work in higher frequency bands. When the access point device adjusts the trigger devices with the coverage ranges where there are the target objects, it is necessary to help the sensing algorithm to improve the identification performance. The working frequency of the corresponding trigger device is raised from 20 MHz to a higher frequency band, e.g., to 40 MHz or higher, so as to increase the information amount of the channel state information eventually obtained, which is a direct improvement of the sensing performance.

It may be understood that the embodiment of the present application makes the performance of the sensing algorithm also improved by raising a bandwidth, i.e., raising the working frequency band of the trigger device. In the embodiment of the present application, the bandwidth is dynamically increased when it is found to be at the near end, which may help to improve the performance of the sensing algorithm in a case of minimizing the occupation of the radio resources.

Referring to FIG. 11, in an embodiment, the wireless sensing method may further include, but is not limited to, step S901 to step S902.

At step S901, according to the channel determination results, trigger devices with coverage ranges where there are target objects are determined, and third configuration information is obtained.

At step S902, the communication information sending power of the trigger devices with the coverage ranges where there are target objects is increased according to the third configuration information, or an enhanced distributed channel access parameter of the access point device is lowered according to the third configuration information.

In an embodiment, when obtaining that there are target object within the coverage ranges of the trigger devices, in order to improve the sensing performance, the embodiment of the present application may further obtain the third configuration information, and increases communication information sending power of the trigger devices with the coverage ranges where there are the target objects according to the third configuration information, or lowering the enhanced distributed channel access (EDCA) parameter of the access point device according to the third configuration information. It may be understood that raising the working frequency bands of the trigger devices in the above embodiment belongs to a direct raising method, and in the embodiment of the present application, it is also possible to raise the sending power, or to lower the EDCA parameter, by an indirect raising method. It needs to be noted that the direct raising method may raise the information amount of the channel state information in any case, while the indirect raising method can only take effect when a channel is more congested, which is not specifically limited herein.

It needs to be noted that in the direct improvement of sensing performance in the embodiment of the present application, in addition to directly raising the working frequency bands of the trigger devices, it is also possible to lower the time interval at which the trigger devices send sensing messages, i.e., to lower the time cycle described in the above embodiment. Therefore, the information amount of the sensing messages is also increased, and ultimately, the information amount of the channel state information is increased, which improves the performance of wireless sensing.

Referring to FIG. 12, in an embodiment, the above step S101 may further include, but is not limited to, step S1001 to step S1002.

At step S1001, a time stamp in one-to-one correspondence with each of trigger devices is respectively determined, and the time stamp is sent to each of the trigger devices, such that the trigger devices send sensing messages according to the corresponding time stamps.

At step S1002, the sensing messages which are sent by the plurality of trigger devices according to the corresponding time stamps are respectively received.

In an embodiment, the access point device, in order to avoid a case in which the plurality of trigger devices send sensing messages at the same time and to avoid causing blocking of the radio, may pre-configure time for each trigger device to send the sensing message. In some embodiments, the access point device respectively determines the time stamps in one-to-one correspondence with the trigger devices, and sends the time stamps to each of the trigger devices. The trigger devices, after receiving the corresponding time stamps, send sensing messages according to the corresponding time stamps, so that the access point device may receive the sensing messages sent by the plurality of trigger devices according to the corresponding time stamps. It may be understood that the time stamps are not the same between different trigger devices, which may avoid a case where the plurality of trigger devices send the sensing messages at the same time.

In an embodiment, the trigger devices include low-frequency trigger devices and high-frequency trigger devices, and as shown with reference to FIG. 13, the time stamps in the above embodiment are obtained according to the following steps, which may include, but are not limited to, step S1101 to step S1105.

At step S1101, the device number of low-frequency trigger devices and the device number of high-frequency trigger devices are respectively obtained.

At step S1102, the low-frequency trigger devices and the high-frequency trigger devices are respectively numbered in accordance with the device numbers.

At step S1103, time cycles in which the low-frequency trigger devices and the high-frequency trigger devices send sensing messages at intervals are obtained.

At step S1104, a time stamp of each of the high-frequency trigger devices is obtained according to the device numbers, serial numbers of the high-frequency trigger devices, and the time cycles.

At step S1105, a time stamp of each of the low-frequency trigger devices is obtained according to the device numbers, serial numbers of the low-frequency trigger devices, the time stamp of the high-frequency trigger device with the end serial number, and the time cycles.

In an embodiment, the access point device sends a time stamp to each of the trigger devices, and numbers each of the trigger devices sequentially according to the device numbers of the low-frequency trigger devices and the high-frequency trigger devices, so that the trigger devices sequentially send the sensing messages according to the different serial numbers. The access point device further obtains time cycles in which the low-frequency trigger devices and the high-frequency trigger devices send sensing messages at intervals, obtain the time stamp of each of the high-frequency trigger devices according to the device numbers, serial numbers of the high-frequency trigger devices, and the time cycles, and obtain the time stamp of each of the low-frequency trigger devices according to the device numbers, serial numbers of the low-frequency trigger devices, the time stamp of the high-frequency trigger device with the end serial number, and the time cycles, so that the times tamps of the trigger devices are not the same. It may be understood that in the embodiment of the present application, the high-frequency trigger devices at the near end are prioritized to send the sensing messages, and then the sensing messages sent by the low-frequency trigger devices at the far end are received in the same time cycle.

The embodiment of the present application may further define a time stamp received by an ith high-frequency trigger device as $T_{H,i}$, define a time stamp received by a jth low-frequency trigger device as $T_{L,i}$, and each trigger device sends a sensing message to the access point device at intervals of T seconds starting from the corresponding time stamp, assuming that a time cycle is T. A calculation method of the time stamp is:

$$T_{H,i} = T0 + \frac{T}{M+N} \times i \qquad (1)$$

$$T_{L,i} = T_{H,N} + \frac{T}{M+N} \times j \qquad (2)$$

In the above formulas (1) and (2), T seconds are divided into M+N parts, M is the device number of low-frequency trigger devices, N is the device number of high-frequency trigger devices, and T0 is a default initial moment. In an embodiment, T0 may be 0, so as to represent that the sensing messages sent by the plurality of trigger devices do not conflict with each other. N higher-frequency-band trigger devices perform sending at $T_{S,H,i,k} = T_{H,i} + kT$, K is the number of time cycles, at which time M lower-frequency trigger devices are on standby, then the lower-frequency trigger devices send the sensing messages, and $T_{S,H,i,k}$ is referred to as the standard time in the above embodiment in the embodiment of the present application.

An embodiment of the present application provides a wireless sensing method, applied to a trigger device, and the trigger device is not described herein. Referring to FIG. 14, the wireless sensing method in the embodiment of the present application includes, but is not limited to, step S1201 to step S1202.

At step S1201, a sensing message is sent to an access point device, such that the access point device obtains corresponding channel state information according to the sensing message, and determines, according to the channel state information, whether there is a trigger device within a coverage range of a corresponding trigger device, so as obtain a channel determination result, and then the access point device obtains configuration information according to the channel determination result.

At step S1202, the configuration information sent by the access point device is received, and a working state of sending the sensing message is adjusted according to the configuration information.

In an embodiment, trigger devices are in communication connection with the access point device, the trigger devices may send sensing messages to the access point device, and the access point device, after receiving the sensing messages, obtains the channel state information of the corresponding trigger devices respectively according to the sensing messages, and may determine a behavior of a user within the signal coverage range of the corresponding trigger device through the channel state information. In the embodiment of the present application, according to the channel state information, whether there is the target object within the coverage range of the corresponding trigger device may be determined, so as obtain the channel determination result. In some embodiments, there are two channel determination results, including a result that there is the target object within the coverage range of the corresponding trigger device, or a result that there is no target object within the coverage range of the corresponding trigger device. According to these two results, the access point device may obtain the configuration information and send the configuration information to the trigger device, and the trigger device may control itself after receiving the configuration information and adjust the working state of the trigger device itself of sending the sensing message.

It may be understood that in adjusting, by the trigger device, the working state of sending the sensing message, the trigger device may adjust whether to send the sensing message, or adjust a frequency of sending the sensing message, and may further adjust a frequency band or the information amount of the sent sensing message, such that the trigger device may perform the adjustment according to whether there is the target object within the coverage range.

According to the embodiment of the present application, after adjusting the working state of sending the sensing message, the trigger device may reduce the occupation of radio resources. The trigger device may adjust the working state of sending the sensing message according to whether there is the target object within the coverage range, thus realizing reasonable planning and scheduling of the plurality of trigger devices, and then effectively improving the capability and efficiency of wireless sensing.

It may be understood that for the trigger device with the coverage range where there is the target object, the embodiment of the present application may improve its sensing performance, and for the trigger device with the coverage range where there is no target object, the embodiment of the present application may reduce its sensing performance, thus reducing the occupation of the radio resources, and improving the capability and efficiency of wireless sensing.

In an embodiment, trigger devices which send sensing messages to the access point device include low-frequency trigger devices and high-frequency trigger devices.

It needs to be noted that the trigger devices are divided into the low-frequency trigger devices and the high-frequency trigger devices in the embodiment of the present application, for a certain trigger device, it may be a low-frequency trigger device and/or a high-frequency trigger device, and frequencies between the low-frequency trigger devices and the high-frequency trigger devices are different. As shown in FIG. 2, in the embodiment of the present application, one access point device may be arranged to provide network access while not less than two trigger devices are connected with the access point device. The low-frequency trigger devices and the high-frequency trigger devices work in different frequency bands, wherein a straight-line distance of an antenna of each low-frequency trigger device with a lower working frequency relative to an antenna of the access point device is greater than or equal to a distance of an antenna of each high-frequency trigger device with a higher working frequency relative to the antenna of the access point device. The low-frequency trigger devices and the high-frequency trigger devices may send sensing messages to the access point device at regular intervals. The low-frequency trigger devices and the high-frequency trigger devices may also be an 802.11 device that can work in two frequency bands at the same time. It may be understood that there may be a plurality of low-frequency trigger devices and a plurality of high-frequency trigger devices, which is not specifically limited herein.

It may be understood that the coverage range of a low-frequency trigger device is higher than that of a high-frequency trigger device, and under the same power, the coverage range of wireless sensing increases as a frequency decreases, so the coverage range of a lower-frequency trigger device is greater than that of a higher-frequency trigger device. The embodiment of the present application adopts a lower-frequency link to increase coverage when the user is located at a far end, and adopts a higher-frequency link to improve an identification performance when the user is located at a near end. Through reasonable planning and scheduling of multi-frequency trigger devices, the performance of the sensing algorithm may be improved and the coverage of the sensing algorithm may be improved compared to only adopting a single-frequency-band trigger device.

In an embodiment, when the wireless sensing method in the embodiment of the present application is applied to high-frequency trigger devices, the access point device is configured to obtain configuration information according to channel determination results of the high-frequency trigger devices.

When the wireless sensing method in the embodiment of the present application is applied to low-frequency trigger devices, the access point device is configured to determine, according to channel determination results of remaining high-frequency trigger devices, whether to adjust working states of sending sensing messages of the low-frequency trigger devices, and in response to determining to adjust the working states of sending the sensing messages of the low-frequency trigger devices, according to channel determination results of the low-frequency trigger devices, obtain configuration information.

In an embodiment, the high-frequency trigger device is arranged at the near end close to the access point device, so that in the embodiment of the present application, for channel determination results of the high-frequency trigger devices, the access point device first sends configuration information to the high-frequency trigger devices, such that the high-frequency trigger devices adjust working states of sending sensing messages. Subsequently, whether to adjust working states of far-end low-frequency trigger devices of sending sensing messages needs to be determined. In the embodiment of the present application, according to channel determination results of the high-frequency trigger devices, whether to adjust the working states of sending the sensing messages of the low-frequency trigger devices is determined. When the trigger devices are low-frequency trigger devices, the access point device makes a determination according to the remaining high-frequency trigger devices connected to them. When a determination result represents yes, according to channel determination results of the low-frequency trigger devices, configuration information is sent to the low-frequency trigger devices, such that the low-frequency trigger devices adjusts the working states of sending the sensing messages.

It may be understood that the wireless sensing method in the embodiment of the present application first adjusts the high-frequency trigger devices at the near end, and then determines whether the low-frequency trigger devices at the far end needs to be adjusted according to the channel determination results in the high-frequency trigger devices. Through such an adjustment mode, in the embodiment of the present application, when the target object is found to be at the near end, priority is given to improving sensing capabilities of the near-end high-frequency trigger devices, and then according to the actual situations of the near-end medium and high-frequency trigger devices, whether to adjust the far-end low-frequency trigger devices is determined. After a determined result is obtained, a algorithmic coverage capability of the near end and far end is then simultaneously improved by adjusting the low-frequency trigger devices at the far end.

In an embodiment, the access point device is further configured to determine, upon the condition that channel determination results of all the high-frequency trigger devices represent that there is no target object within the coverage range, to adjust the working states of sending the sensing messages of the low-frequency trigger devices; and determine, upon the condition that the channel determination result of the high-frequency trigger device represent that there is a target object within the coverage range, not to adjust the working state of sending the sensing message of the low-frequency trigger device, or, determine whether to adjust the working states of sending the sensing messages of the low-frequency trigger devices according to a number of the high-frequency trigger devices with a target object within the coverage range.

In an embodiment, the access point device in the embodiment of the present application determines, according to channel determination results of the high-frequency trigger devices, whether to adjust the working states of sending the sensing messages of the low-frequency trigger devices. In some embodiments, upon the condition that the channel determination results of all the high-frequency trigger devices represent that there is no target object within the coverage range, it is determined to adjust the working states of sending the sensing messages of the low-frequency trigger devices. At this time, it indicates that there is no target object within the coverage ranges of the near-end high-frequency trigger devices, and there is no need to improve the sensing capabilities of the near-end high-frequency trigger devices, so the adjustment of the far-end low-frequency trigger devices may be determined.

In addition, upon the condition that the channel determination result of the high-frequency trigger device represents that there is a target object within the coverage range, the access point device may set conditions in advance to determine whether to adjust the low-frequency trigger devices at the far end. In some embodiments, it may be that once there is a high-frequency trigger device with a coverage range where there is a target object, the low-frequency trigger devices at the far end are no longer adjusted, so as to meet the prioritization of near-end sensing capability and efficiency improvement in case of certain needs. Not only that, a condition of determination may further be determining whether to adjust the working states of sending the sensing messages of the low-frequency trigger devices according to the number of high-frequency trigger devices with the coverage ranges where there are target objects. For example, when the access point device presets a first quantity threshold for determining whether to adjust working states of the far-end low-frequency trigger devices of sending the sensing messages, when the number of high-frequency trigger devices with the coverage ranges where there are target objects is less than a first quantity threshold, it indicates that the number of high-frequency trigger devices needing to be adjusted at the near end is within a controllable range, then the adjustment of the far-end low-frequency trigger devices does not affect the occupation of the radio resources, and therefore it is determined that the working states of sending the sensing messages of the low-frequency trigger devices may be adjusted. When the number of high-frequency trigger devices with the coverage ranges where there are target objects is greater than the first quantity threshold, it indicates that improving the sensing performance of the near-end high-frequency trigger devices, and then improving the sensing performance of the far-end low-frequency trigger devices will affect a sensing capability of the whole system, so the far-end low-frequency trigger devices are no longer adjusted.

Referring to FIG. 15, in an embodiment, the above step S1202 may further include, but is not limited to, step S1301 to step S1302.

At step S1301, first configuration information sent by the access point device is received to increase the information amount of sending a sensing message, wherein the first configuration information is obtained by the access point device when there is the target object within the coverage range of the trigger device.

At step S1302, second configuration information sent by the access point device is received, and sending a sensing message is reduced or stopped according to the second configuration information, wherein the second configuration information is obtained by the access point device when there is no target object within the coverage range of the trigger device.

In an embodiment, in the process of adjusting the working states of the trigger devices of sending the sensing messages, when the channel determination results of the trigger devices determine that there are target objects within the coverage ranges, the access point device sends the first configuration information to the trigger devices with the coverage ranges where there are the target objects, such that the trigger devices, after receiving the first configuration information, increase the information amount of sending the sensing messages, thus, sensing performances of these trigger devices are improved, and increasing the information amount of the channel state information helps to analyze and obtain actions of users in the coverage ranges. Whereas, for the trigger devices whose channel determination results determine that there is no target object within the coverage ranges, the access point device sends second configuration information to the trigger devices with the coverage ranges where there is no target object, such that the trigger devices, after receiving the second configuration information, reduce or stop sending the sensing messages. For this type of trigger devices, there is no target object within their coverage ranges, and continuing to send sensing messages will occupy the radio resources, resulting in the reduction of the performance of wireless sensing, so allowing this type of trigger devices to reduce or stop sending sensing messages may effectively reduce its occupation of the radio resources.

In an embodiment, prior to the above step S1201, the method may further include, but is not limited to, the following step.

Initial configuration information sent by the access point device is received, and a working frequency band is configured as a first working frequency band according to the initial configuration information.

In addition, the above step 1301 may further include, but is not limited to, the following step.

The first configuration information sent by the access point device is received, and the working frequency band is raised from the first working frequency band to a second working frequency band according to the first configuration information.

In an embodiment, according to the embodiment of the present application, the access point device sends one piece of initial configuration information to all the trigger devices prior to executing the wireless sensing method, such that the trigger devices, after receiving the initial configuration information, configure their own working frequency bands as the first working frequency bands. It may be understood that the first working frequency band is a lower working frequency band, and working under this frequency band may save the power of the trigger devices and reduce the occupation of radio. When the type of trigger devices with the coverage ranges where there are the target objects are adjusted, the access point device may send the first configuration information to them, such that the trigger devices, after receiving the first configuration information, raise the working frequency bands from the first working frequency bands to second working frequency bands.

For example, in the embodiment of the present application, the access point device initially configures all trigger devices to work in a working frequency band of 20 MHz by default by sending the initial configuration information, so as to save the power of the trigger devices and to reduce the occupation of radio. It may be understood that for 2.4 G trigger devices, their working frequency bands may be 20 MHz or 40 MHz, and for 5G trigger devices, their working frequency bands may be 20 MHz, 40 MHz or 80 MHz. It may be understood that the trigger devices may further work in higher frequency bands. When the access point device adjusts the trigger devices with the coverage ranges where there are the target objects, it is necessary to help the sensing algorithm to improve the identification performance. The working frequency of the corresponding trigger device is raised from 20 MHz to a higher frequency band, e.g., to 40 MHz or higher, so as to increase the information amount of the channel state information eventually obtained, which is a direct improvement of the sensing performance.

It may be understood that the embodiment of the present application makes the performance of the sensing algorithm also improved by raising a bandwidth, i.e., raising the working frequency band of the trigger device. In the embodiment of the present application, the bandwidth is dynamically increased when it is found to be at the near end, which may help to improve the performance of the sensing algorithm in a case of minimizing the occupation of the radio resources.

In an embodiment, when there is the target object within the coverage range of the trigger device, the access point device may further obtain third configuration information. The access point device is configured to increase communication information sending power of the trigger device with the coverage range where there is the target object according to the third configuration information, or lower an enhanced distributed channel access parameter according to the third configuration information.

In an embodiment, when obtaining that there are target objects within the coverage ranges of the trigger devices, in order to improve the sensing performance, in the embodiment of the present application, the access point device may further obtain the third configuration information, and increase communication information sending power of the trigger devices with the coverage ranges where there are the target objects according to the third configuration information, or lower an EDCA parameter according to the third configuration information. It may be understood that raising the working frequency bands of the trigger devices in the above embodiment belongs to a direct raising method, and in the embodiment of the present application, the access point device may further raise the sending power, or to lower the EDCA parameter, by an indirect raising method. It needs to be noted that the direct raising method may raise the information amount of the channel state information in any case, while the indirect raising method can only take effect when a channel is more congested, which is not specifically limited herein.

It needs to be noted that in the direct improvement of sensing performance in the embodiment of the present application, in addition to directly raising the working frequency bands of the trigger devices, it is also possible to lower the time interval at which the trigger devices send sensing messages, i.e., to lower the time cycle described in the above embodiment. Therefore, the information amount of the sensing messages is also increased, and ultimately, the information amount of the channel state information is increased, which improves the performance of wireless sensing.

Referring to FIG. 16, in an embodiment, the above step S1201 may further include, but is not limited to, step S1401 to step S1402.

At step S1401, time stamps sent by the access point device are received, wherein the time stamps are in one-to-one correspondence with trigger devices.

At step S1402, sensing messages are sent to the access point device according to the time stamps.

In an embodiment, the access point device, in order to avoid a case in which the plurality of trigger devices send sensing messages at the same time and to avoid causing blocking of the radio, may pre-configure time for each trigger device to send the sensing message. In some embodiments, the access point device respectively determines the time stamps in one-to-one correspondence with the trigger devices, and sends the time stamps to each of the trigger devices. The trigger devices, after receiving the corresponding time stamps, send sensing messages according to the corresponding time stamps, so that the access point device may receive the sensing messages sent by the plurality of trigger devices according to the corresponding time stamps. It may be understood that the time stamps are not the same between different trigger devices, which may avoid a case where the plurality of trigger devices send the sensing messages at the same time.

In an embodiment, the trigger devices are low-frequency trigger devices or high-frequency trigger devices, and the access point device is connected with the plurality of low-frequency trigger devices and high-frequency trigger devices respectively.

When the trigger devices are the high-frequency trigger devices, the time stamps are obtained by the access point device according to the device numbers of the plurality of low-frequency trigger devices and high-frequency trigger devices, serial numbers of the high-frequency trigger devices, and time cycles in which the high-frequency trigger devices send the sensing messages at intervals.

When the trigger devices are the low-frequency trigger devices, the time stamps are obtained by the access point device according to the device numbers, serial numbers of the low-frequency trigger devices, the time stamp of the high-frequency trigger device with the end serial number connected with the access point device, and time cycles in which the low-frequency trigger devices send the sensing messages at intervals.

In an embodiment, the access point device sends one time stamp to each trigger devices, and numbers the trigger devices sequentially according to the device numbers of the low-frequency trigger devices and the high-frequency trigger devices, so that the trigger devices sequentially send the sensing messages according to the different serial numbers. The access point device further obtains time cycles in which the low-frequency trigger devices and the high-frequency trigger devices send sensing messages at intervals, obtains the time stamp of each of the high-frequency trigger devices according to the device numbers, serial numbers of the high-frequency trigger devices, and the time cycles, and obtains a time stamp of each of the low-frequency trigger devices according to the device numbers, serial numbers of the low-frequency trigger devices, the time stamp of the high-frequency trigger device with the end serial number, and the time cycles, so that the times tamps of the trigger devices are not the same. It may be understood that in the embodiment of the present application, the high-frequency trigger devices at the near end are prioritized to send the sensing messages, and then the sensing messages sent by the low-frequency trigger devices at the far end are received in the same time cycle.

The embodiment of the present application may further define a time stamp received by an ith high-frequency trigger device as $T_{H,i}$, define a time stamp received by a jth low-frequency trigger device as $T_{L,i}$, and each trigger device sends a sensing message to the access point device at intervals of T seconds starting from the corresponding time stamp, assuming that a time cycle is T. A calculation method of the time stamp is:

$$T_{H,i} = T0 + \frac{T}{M+N} \times i \qquad (1)$$

$$T_{L,i} = T_{H,N} + \frac{T}{M+N} \times j \qquad (2)$$

In the above formulas (1) and (2), T seconds are divided into M+N parts, M is the device number of low-frequency trigger devices, N is the device number of high-frequency trigger devices, and T0 is a default initial moment. In an embodiment, T0 may be 0, so as to represent that sensing messages sent by the plurality of trigger devices do not conflict with each other. N higher-frequency-band trigger devices perform sending at $T_{S,H,i,k} = T_{H,i} + kT$, K is the number of time cycles, at which time M lower-frequency trigger devices are on standby, then the lower-frequency trigger devices send the sensing messages, and $T_{S,H,i,k}$ is referred to as the standard time in the above embodiment in the embodiment of the present application.

In addition, the following embodiment is provided in the embodiments of the present application, this embodiment includes the following steps.

1. All trigger devices are initially configured to work in a working frequency band of 20 MHz by default, so as to save the power of the trigger devices and to reduce the occupation of radio resources.
2. At the moment T0, the access point device sends a time stamp to each of the trigger devices. A time stamp received by an ith high-frequency trigger device is defined as $T_{H,i}$, a time stamp received by a jth low-frequency trigger device is defined as $T_{L,i}$, and each trigger device sends a sensing message to the access point device at intervals of T seconds starting from the time stamp. A calculation method of the time stamp is:

$$T_{H,i} = T0 + \frac{T}{M+N} \times i \qquad (1)$$

$$T_{L,i} = T_{H,N} + \frac{T}{M+N} \times j \qquad (2)$$

T seconds are divided into M+N parts, so as to represent that the sensing messages sent by a plurality of trigger devices do not conflict with each other. N higher-frequency-band trigger devices perform sending at $T_{S,H,i,k} = T_{H,i} + kT$. M lower-frequency trigger devices are on standby. $T_{S,H,i,k}$ is referred to as standard time.

3. The access point device, each time receiving a sensing message from the trigger device, performs a channel estimation, collects CSI information, defines kth piece of CSI information from the ith high-frequency trigger device as $H_{H,i,k}$, and at the same time records the time $T_{R,H,i,k}$ at which this sensing message is received.

4. After K T-seconds, due to blocking of radio or other reasons, the number of sensing messages received by the access point device from each trigger device may not reach K, or the time interval between received messages is not uniform T-seconds. To solve this problem, the access point device performs an interpolation on CSI information of each trigger device, defining $\hat{H}_{H,i,k}$ to be interpolated data at kth standard time.

Methods of the interpolation may be the following.

(1) Inverse distance weighting method, i.e., CSI received at standard time $T_{S,H,i,k}$ is a weighted average of CSI at other moments, and the farther away from the standard time, the smaller the weight, $H_{H,i,k}$ is CSI data from the ith trigger device at the kth moment, and then a calculation method of the interpolation is:

$$\widehat{H}_{H,i,k} = \sum_{k=1}^{K} w_k H_{H,i,k} \qquad (3)$$

where $w_k$ is a weighted value at the kth moment. When $k_1 < k_2 < k$ meets $w_{k_1} < w_{k2}$, at the same time when $k_2 > k_3 > k$ meets $w_{k2} < w_{k3}$, and therefore, the farther away from k, the smaller the weight.

(2) Cubic spline interpolation, i.e., CSI received at standard time $T_{S,H,i,k}$ is a weighted average of all CSI data prior to the standard time $T_{S,H,i,k}$, i.e.,

$$\widehat{H}_{H,i,k_1} = \sum_{k_1=1}^{k} w_k H_{H,i,k_1} \qquad (4)$$

where when k is less than 3, $\hat{H}_{H,i,k}$ is equal to $H_{H,i,k}$ closest to it. When k is greater than three, the weight $w_k$ is calculated using the cubic spline formula.

(3) The CSI closest to the standard time is used for interpolation.

5. K piece of CSI are used to determine whether there is a target object within a coverage range of an ith high-frequency trigger device, and a determination method may be the following.

(1) A covariance matrix of K pieces of CSI () is calculated, and when a covariance has a diagonal element greater than a threshold value $\tau$, it is considered that there is a target object within the coverage range of the high-frequency trigger device.

(2) Whether there is a target object within the coverage range is determined by a pre-trained neural network.

The same determination needs to be performed on all N high-frequency trigger devices to determine whether there are target objects within their coverage ranges.

6. Parameters of all high-frequency trigger devices that are determined in step 5 to have coverage ranges where there are target objects are adjusted to increase the information amount of the CSI, thereby helping the sensing algorithm to improve the identification performance, and the parameters that may be adjusted are divided into 2 levels as follows.

(1) Direct raising method: a sending frequency band is raised from 20 MHz to a higher frequency band, or a sending interval T is lowered.

(2) Indirect raising method: the sending power is raised, or the EDCA parameter is lowered.

The direct raising method may raise the information amount of the CSI in any case, while the indirect raising method can only take effect when a channel is more congested.

7. In step 5, if there is no target object within the coverage range of the high-frequency trigger device, the access point device requests the high-frequency trigger device to stop sending the sensing message, and the low-frequency trigger device sends the sensing message at $T_{S,L,i,k} = T_{L,i} + kT$ time. Whether to adjust the low-frequency trigger device is determined by the number of the high-frequency trigger devices with the coverage ranges where there are the target objects, a processing process of which is the same as that of the high-frequency trigger device, which is not repeated herein.

8. The CSI collection method described in step 4 is used, the CSI data from the high-frequency trigger device or the low-frequency trigger device is continuously obtained and sent for subsequent processing.

FIG. 17 shows an electronic device 100 provided by an embodiment of the present application. The electronic device 100 includes a processor 110, a memory 120, and a computer program stored on the memory 120 and capable of running on the processor 110. The computer program, when running, is used to execute the above wireless sensing method.

The processor 10 and the memory 20 may be connected via a bus or other means.

The memory 120, as a non-transient computer readable storage medium, may be used to store a non-transient software program as well as a non-transient computer executable program, such as the wireless sensing methods described in the embodiments of the present application. The processor 110 implements the wireless sensing method described above by running the non-transient software program stored in the memory 120 as well as instructions.

The memory 120 may include a storage program area and a storage data area, wherein the storage program area may store an operating system, and an application program required by at least one function, and the storage data area may store and execute the above wireless sensing method. In addition, the memory 120 may include a high-speed random access memory 120, and may further include a non-transient memory 120, such as at least one storage device memory device, a flash memory device, or other non-transient solid state memory device. In some implementations, the memory 120 may include memories 120 remotely arranged relative to the processor 110, and these remote memories 120 may be connected to this electronic device 100 via a network. Examples of the above network include, but are not limited to, the Internet, corporate intranets, local area networks, mobile communication networks, and combinations thereof.

The non-transient software program required to implement the above wireless sensing method, as well as the instructions, are stored in the memory 120, and when executed by one or more processors 110, execute the above wireless sensing method, such as executing method step S101 to step S104, method step S201 to step S202 in FIG. 4, method step S301 to step S302 in FIG. 5, method step S401 to step S404 in FIG. 6, method step S501 to step S502 in FIG. 7, method step S601 to step S603 in FIG. 8, method step S701 to step S702 in FIG. 9, method step S801 to step S802 in FIG. 10, method step S901 to step S902 in FIG. 11, method step S1001 to step S1002 in FIG. 12, method step S1101 to step S1105 in FIG. 13, method step S1201 to step S1202 in FIG. 14, method step S1301 to step S1302 in FIG. 15, and method step S1401 to step S1402 in FIG. 16.

An embodiment of the present application further provides a computer readable storage medium, storing computer executable instructions. The computer executable instructions are used to execute the above wireless sensing method.

In an embodiment, the computer readable storage medium stores computer executable instructions that are executed by one or more control processors, such as executing method step S101 to step S104, method step S201 to step S202 in FIG. 4, method step S301 to step S302 in FIG. 5, method step S401 to step S404 in FIG. 6, method step S501 to step S502 in FIG. 7, method step S601 to step S603 in FIG. 8, method step S701 to step S702 in FIG. 9, method step S801 to step S802 in FIG. 10, method step S901 to step S902 in FIG. 11, method step S1001 to step S1002 in FIG. 12, method step S1101 to step S1105 in FIG. 13, method step S1201 to step S1202 in FIG. 14, method step S1301 to step S1302 in FIG. 15, and method step S1401 to step S1402 in FIG. 16.

The embodiments of the present application at least include the following beneficial effects. The wireless sensing method in the embodiments of the present application may be applied to the access point device and the trigger devices. The access point device is in communication connection with the plurality of trigger devices. By applying the wireless sensing method, the access point device may receive the sensing message sent by the trigger devices, obtain the channel state information of the corresponding trigger devices according to the sensing messages, and then determine, according to the channel state information, whether there is the target object within the coverage range of the corresponding trigger device, so as obtain the channel determination result. Then the access point device sends, according to the channel determination result, the configuration information to the trigger device, such that the trigger device may adjust the working state of sending the sensing messages according to the configuration information. Thus after adjusting the working state of sending the sensing message, the trigger device may reduce the occupation of radio resources. The trigger device may adjust the working state of sending the sensing message according to whether there is the target object within the coverage range, thus realizing reasonable planning and scheduling of the plurality of trigger devices, and then effectively improving the capability and efficiency of wireless sensing.

The apparatus embodiment described above is merely illustrative. Units described as separate parts may or may not be physically separated, that is, they may be located in one place, or they may be distributed onto a plurality of network units. Some or all of the modules can be selected according to actual needs to realize the purpose of the scheme of the embodiment.

It may be understood by those of ordinary skill in the art that all or some of the steps in the methods disclosed above, and systems may be implemented as software, firmware, hardware, and appropriate combinations thereof. Some or all of the physical components may be implemented as software executed by a processor, such as a central processor, digital signal processor, or microprocessor, or implemented as hardware, or implemented as an integrated circuit, such as an application-specific integrated circuit. Such software may be distributed on a computer readable medium, and the computer readable medium may include a computer storage medium (or non-transitory medium) and a communication medium (or transitory medium). As is well known to those of ordinary skill in the art, the computer storage medium includes volatile and non-volatile, removable and non-removable media implemented in any method or technology for storing information, such as a computer readable instruction, data structure, program module, or other data. The computer storage medium includes, but is not limited to, a RAM, a ROM, an EEPROM, a flash memory or other memory technology, a CD-ROM, a digital versatile disk (DVD) or other optical disk storage, a magnetic cartridge, a magnetic tape, storage device storage, or other magnetic storage apparatus, or any other medium that may be used for storing desired information and that may be accessed by a computer. In addition, it is well known to those of ordinary skill in the art that the communication medium typically includes a computer readable instruction, a data structure, a program module, or other data in a modulated data signal such as a carrier wave or other transmission mechanism, and may include any information delivery medium.

It should also be understood that the various implementations provided by the embodiments of the present application may be combined in any way to achieve different technical effects.

The above is a specific description of some of the implementations of the present application, but the present application is not limited to the above implementations, and those skilled in the art may make various equivalent deformations or replacements without violating the shared conditions of the essence of the present application, and these equivalent deformations or replacements are included in the scope defined by the claims of the present application.

## Claims

**1.** A wireless sensing method, applied to an access point device, the access point device being in communication connection with a plurality of trigger devices, and the method comprising:

respectively receiving sensing messages which are sent by the plurality of trigger devices;
obtaining, according to the sensing messages, channel state information of a corresponding trigger device;
determining, according to the channel state information, whether there is a target object within a coverage range of the corresponding trigger device, so as obtain a channel determination result; and
sending, according to the channel determination result, configuration information to the trigger device, such that the trigger device adjusts a working state of sending the sensing message.

**2.** The wireless sensing method according to claim 1, wherein the trigger device is configured to send the sensing message at intervals according to a preset time cycle; and
determining, according to the channel state information, whether there is a target object within the coverage range of the corresponding trigger device, so as obtain the channel determination result comprises:

forming sequence information according to a plurality of pieces of the channel state information of each the trigger device in a plurality of the time cycles; and
determining, according to the sequence information, whether there is a target object within the coverage range of the corresponding trigger device, so as obtain the channel determination result.

**3.** The wireless sensing method according to claim 2, wherein prior to determining, according to the sequence information, whether there is a target object within the coverage range of the corresponding trigger device, so as obtain the channel determination result, the method further comprises:

obtaining a message time interval between the pieces of channel state information in the sequence information; and
upon the condition that a magnitude of the message time interval does not correspond to a magnitude of the time cycle, performing an interpolation operation on the sequence information, such that the magnitude of the message time interval after interpolation corresponds to the magnitude of the time cycle.

**4.** The wireless sensing method according to claim 3, wherein performing the interpolation operation on the sequence information comprises:

obtaining standard time of target channel state information to be interpolated; and

performing an inverse distance weight configuration on the channel state information not at the standard time in the sequence information, performing a weighted average calculation on the channel state information of different weights, obtaining target channel state information, and interpolating the target channel state information into the sequence information;

or, obtaining a plurality of the channel state information prior to the standard time in the sequence information, performing a weighted average calculation on the plurality of channel state information, obtaining target channel state information, and interpolating the target channel state information into the sequence information;

or, obtaining the channel state information at a time interval corresponding to the standard time in the sequence information, using the channel state information as target channel state information after interpolation, and interpolating the target channel state information into the sequence information.

**5.** The wireless sensing method according to claim 2, wherein determining, according to the sequence information, whether there is a target object within the coverage range of the corresponding trigger device, so as obtain the channel determination result comprises:

calculating a covariance matrix of the sequence information, and determining, according to whether a diagonal element of a covariance is greater than a threshold value, whether there is a target object within the coverage range of the corresponding trigger device, so as obtain the channel determination result;

or, inputting the sequence information into a pre-trained neural network model, obtaining an output result of the neural network model, and determining, according to the output result, whether there is a target object within the coverage range of the corresponding trigger device, so as obtain the channel determination result.

**6.** The wireless sensing method according to claim 1, wherein the trigger devices comprise a low-frequency trigger device and a high-frequency trigger device, and both the low-frequency trigger device and the high-frequency trigger device are configured to send the sensing messages to the access point device.

**7.** The wireless sensing method according to claim 6, wherein sending, according to the channel determination result, the configuration information to the trigger device, such that the trigger device adjusts the working state of sending the sensing message comprises:

sending, according to the channel determination result of the high-frequency trigger device, configuration information to the high-frequency trigger device, such that the high-frequency trigger device adjusts the working state of sending the sensing message;

determining, according to the channel determination result of the high-frequency trigger device, whether to adjust the working state of sending the sensing message of the low-frequency trigger device; and

in response to determining to adjust the working state of sending the sensing message of the low-frequency trigger device, sending, according to the channel determination result of the low-frequency trigger device, configuration information to the low-frequency trigger device, such that the low-frequency trigger device adjusts the working state of sending the sensing message.

**8.** The wireless sensing method according to claim 7, wherein determining, according to the channel determination result of the high-frequency trigger device, whether to adjust the working state of sending the sensing message of the low-frequency trigger device comprises:

upon the condition that the channel determination results of all the high-frequency trigger devices represent that there is no target object within the coverage range, determining to adjust the working state of sending the sensing message of the low-frequency trigger device; or

upon the condition that the channel determination result of the high-frequency trigger device represents that there is a target object within the coverage range, determining not to adjust the working state of sending the sensing message of the low-frequency trigger device, or, determining whether to adjust the working state of sending the sensing message of the low-frequency trigger device according to a number of the high-frequency trigger devices with a target object within the coverage range.

**9.** The wireless sensing method according to claim 1 or 6, wherein sending, according to the channel determination result, the configuration information to the trigger device, such that the trigger device adjusts the working state of sending the sensing message comprises:

determining, according to the channel determination result, the trigger device with a target object within the coverage range, sending first configuration information to the trigger device with a target object within the coverage range, such that the trigger device increases an information amount of sending the sensing message; or, determining, according to the channel determination result, the trigger device without a target object within the coverage range, sending second configuration information to the trigger device without a target object within the coverage range, such that the trigger device reduces or stops sending the sensing message.

**10.** The wireless sensing method according to claim 9, wherein prior to respectively receiving the sensing messages which are sent by the plurality of trigger devices, the method further comprises:

respectively sending initial configuration information to the plurality of trigger devices, such that the trigger devices configure a working frequency band thereof as a first working frequency band after receiving the initial configuration information; and
sending the first configuration information to the trigger device with a target object within the coverage range comprises:
sending the first configuration information to the trigger device with a target object within the coverage range, such that the trigger device raises the working frequency band from the first working frequency band to a second working frequency band.

**11.** The wireless sensing method according to claim 9, wherein the method further comprises:

determining, according to the channel determination result, the trigger device with a target object within the coverage range, and obtaining third configuration information; and
increasing communication information sending power of the trigger device with a target object within the coverage range according to the third configuration information, or lowering an enhanced distributed channel access parameter of the access point device according to the third configuration information.

**12.** The wireless sensing method according to claim 1 or 6, wherein respectively receiving sensing messages which are sent by the plurality of trigger devices comprises:

respectively determining time stamps in one-to-one correspondence with the trigger devices, and sending the time stamps to the trigger devices, such that the trigger devices send the sensing messages according to the corresponding time stamps; and
respectively receiving the sensing messages which are sent by the plurality of trigger devices according to the corresponding time stamps.

**13.** The wireless sensing method according to claim 7, wherein the trigger devices comprise a low-frequency trigger device and a high-frequency trigger device, and time stamps are obtained according to the following steps:

respectively obtaining a device number of the low-frequency trigger devices and a device number of the high-frequency trigger devices;
respectively numbering the low-frequency trigger devices and the high-frequency trigger devices in accordance with the device numbers;
obtaining a time cycle in which the low-frequency trigger devices and the high-frequency trigger devices send the sensing messages at intervals;
obtaining a time stamp of each the high-frequency trigger device according to the device numbers, a serial number of the high-frequency trigger device, and the time cycle; and
obtaining a time stamp of each the low-frequency trigger device according to the device numbers, a serial number of the low-frequency trigger device, the time stamp of the high-frequency trigger device with the end serial number, and the time cycle.

**14.** A wireless sensing method, applied to a trigger device, the trigger device being in communication connection with an access point device, and the method comprising:

sending a sensing message to the access point device, such that the access point device obtains corresponding channel state information according to the sensing message, and determines whether there is a target object within a coverage range of the corresponding trigger device according to the channel state information, and obtains a channel determination result, and the access point device then obtains configuration information according to the channel determination result; and
receiving the configuration information sent by the access point device, and adjusting a working state of sending the sensing message according to the configuration information.

**15.** The wireless sensing method according to claim 14, wherein trigger devices which send sensing messages to the access point device comprise a low-frequency trigger device and a high-frequency trigger device.

**16.** The wireless sensing method according to claim 15, wherein upon the condition that the method is applied to the high-frequency trigger device, the access point device is configured to obtain the configuration information according to the channel determination result of the high-frequency trigger device; or
upon the condition that the method is applied to the low-frequency trigger device, the access point device is configured to determine, according to the channel determination result of the remaining high-frequency trigger device, whether to adjust a working state of sending a sensing message of the low-frequency trigger device, and in response to determining to adjust the working state of sending the sensing message of the low-frequency device, obtain the configuration information according to the channel determination result of the low-frequency trigger device.

**17.** The wireless sensing method according to claim 16, wherein the access point device is further configured to: upon the condition that the channel determination results of all the high-frequency trigger devices represent that there is no target object within the coverage range, determine to adjust the working state of sending the sensing message of the low-frequency trigger device; and upon the condition that the channel determination result of the high-frequency trigger device represents that there is a target object within the coverage range, determine not to adjust the working state of sending the sensing message of the low-frequency trigger device, or, determine whether to adjust the working state of sending the sensing message of the low-frequency trigger device according to a number of the high-frequency trigger devices with a target object within the coverage range.

**18.** The wireless sensing method according to claim 14 or 15, wherein receiving the configuration information sent by the access point device, and adjusting the working state of sending the sensing message according to the configuration information comprises:

receiving first configuration information sent by the access point device to increase an information amount of sending the sensing message, wherein the first configuration information is obtained by the access point device upon the condition that there is a target object within the coverage range of the trigger device; and
receiving second configuration information sent by the access point device, and reducing or stopping sending the sensing message according to the second configuration information, wherein the second configuration information is obtained by the access point device upon the condition that there is no target object within the coverage range of the trigger device.

**19.** The wireless sensing method according to claim 18, wherein prior to sending the sensing message to the access point device, the method further comprises:

receiving initial configuration information sent by the access point device, and configuring a working frequency band as a first working frequency band according to the initial configuration information; and
receiving the first configuration information sent by the access point device comprises:
receiving the first configuration information sent by the access point device, and raising the working frequency band from the first working frequency band to a second working frequency band according to the first configuration information.

**20.** The wireless sensing method according to claim 18, wherein upon the condition that there is a target object within the coverage range of the trigger device, the access point device further obtains third configuration information, and the access point device is configured to increase communication information sending power of the trigger device with a target object within the coverage range according to the third configuration information, or lower an enhanced distributed channel access parameter according to the third configuration information.

**21.** The wireless sensing method according to claim 14 or 15, wherein sending the sensing message to the access point device comprises:

receiving a time stamp sent by the access point device, wherein the time stamp is in one-to-one correspondence with the trigger device; and

sending the sensing message to the access point device according to the time stamp.

**22.** The wireless sensing method according to claim 21, wherein the trigger device is a low-frequency trigger device or a high-frequency trigger device, and the access point device is connected with a plurality of the low-frequency trigger devices and a plurality of the high-frequency trigger devices respectively;

upon the condition that the trigger device is the high-frequency trigger device, the time stamp is obtained by the access point device according to device numbers of the plurality of low-frequency trigger devices and high-frequency trigger devices, a serial number of the high-frequency trigger device, and a time cycle in which the high-frequency trigger device sends the sensing message at intervals; and

upon the condition that the trigger device is the low-frequency trigger device, the time stamp is obtained by the access point device according to the device numbers, a serial number of the low-frequency trigger device, a time stamp of the high-frequency trigger device with an end serial number and connected with the access point device, and a time cycle in which the low-frequency trigger device sends the sensing message at intervals.

**23.** An electronic device, comprising a memory and a processor, wherein the memory stores a computer program, and the processor, when executing the computer program, implements the wireless sensing method according to any one of claims 1 to 22.

**24.** A computer readable storage medium, storing a program, wherein the program, when executed by a processor, implements the wireless sensing method according to any one of claims 1 to 22.

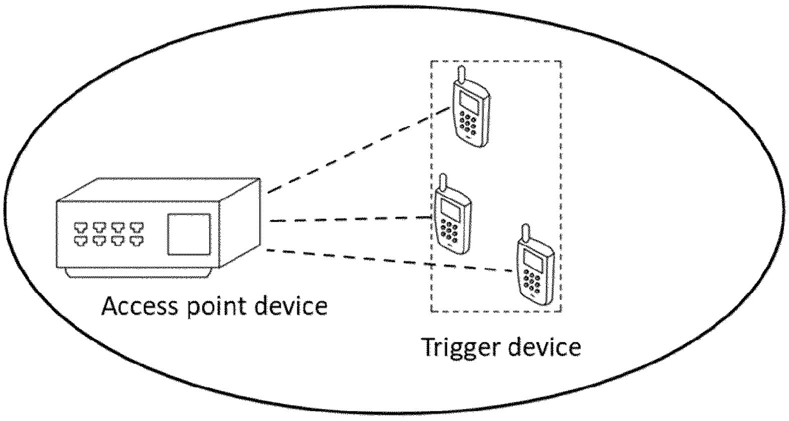
Access point device
Trigger device

FIG.1

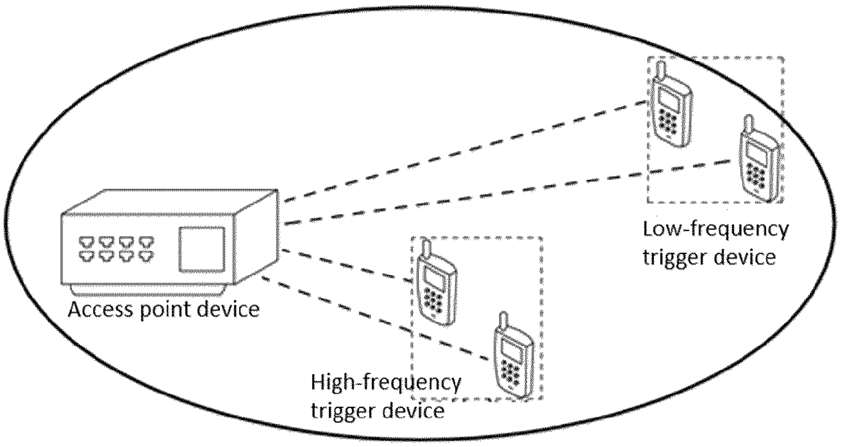
Low-frequency trigger device
Access point device
High-frequency trigger device

FIG.2

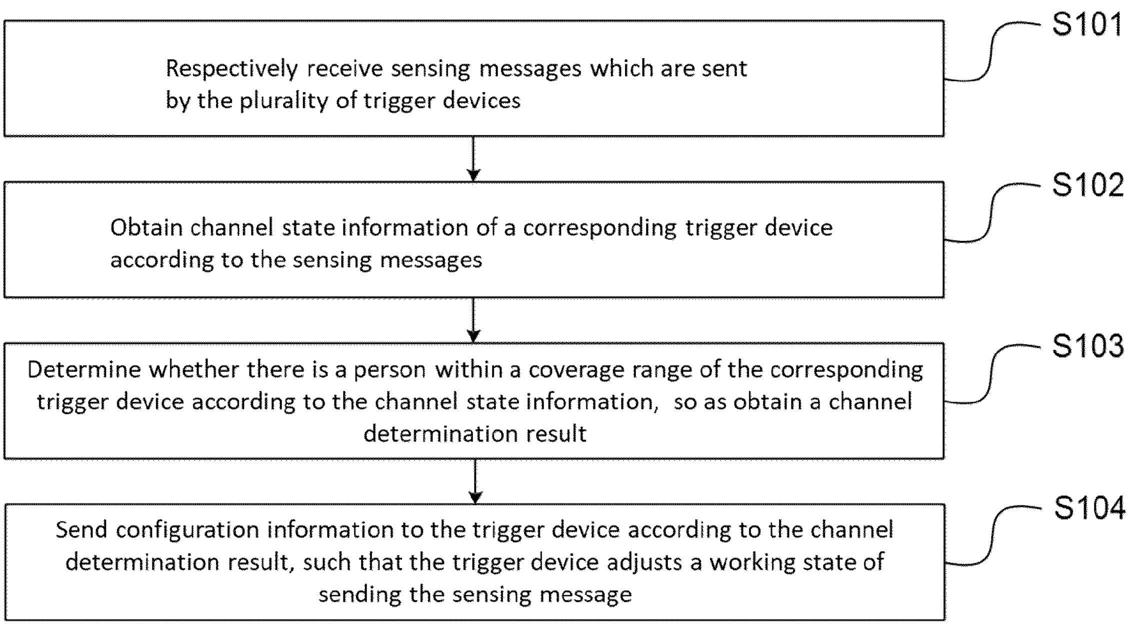
S101
Respectively receive sensing messages which are sent by the plurality of trigger devices
S102
Obtain channel state information of a corresponding trigger device according to the sensing messages
S103
Determine whether there is a person within a coverage range of the corresponding trigger device according to the channel state information, so as obtain a channel determination result
S104
Send configuration information to the trigger device according to the channel determination result, such that the trigger device adjusts a working state of sending the sensing message

FIG.3

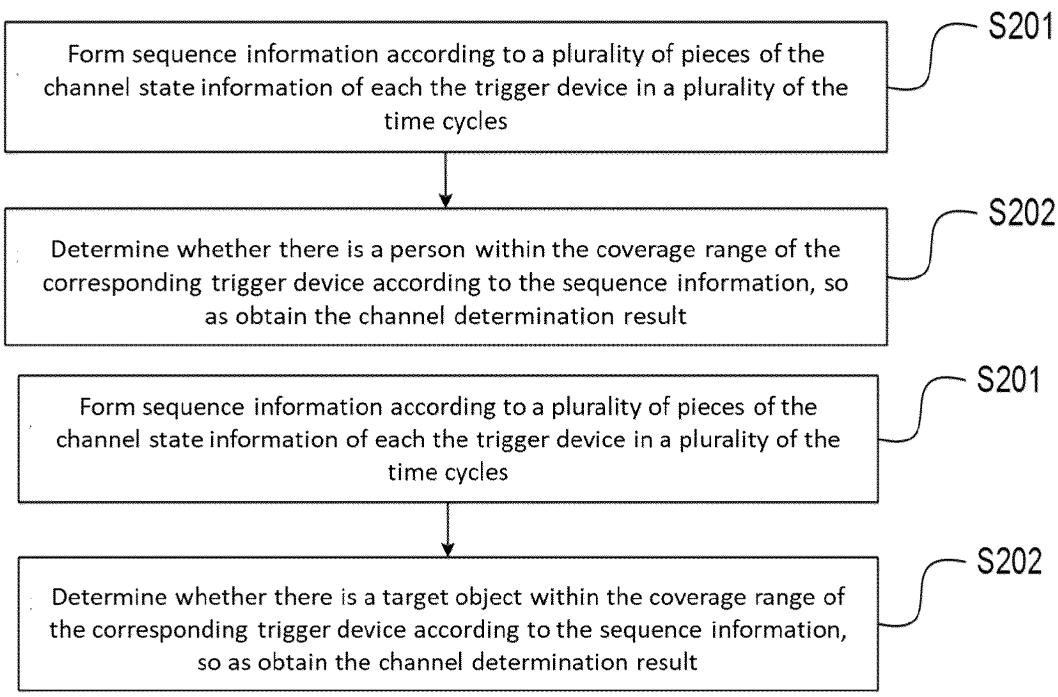
S201
Form sequence information according to a plurality of pieces of the channel state information of each the trigger device in a plurality of the time cycles
S202
Determine whether there is a person within the coverage range of the corresponding trigger device according to the sequence information, so as obtain the channel determination result
S201
Form sequence information according to a plurality of pieces of the channel state information of each the trigger device in a plurality of the time cycles
S202
Determine whether there is a target object within the coverage range of the corresponding trigger device according to the sequence information, so as obtain the channel determination result

FIG.4

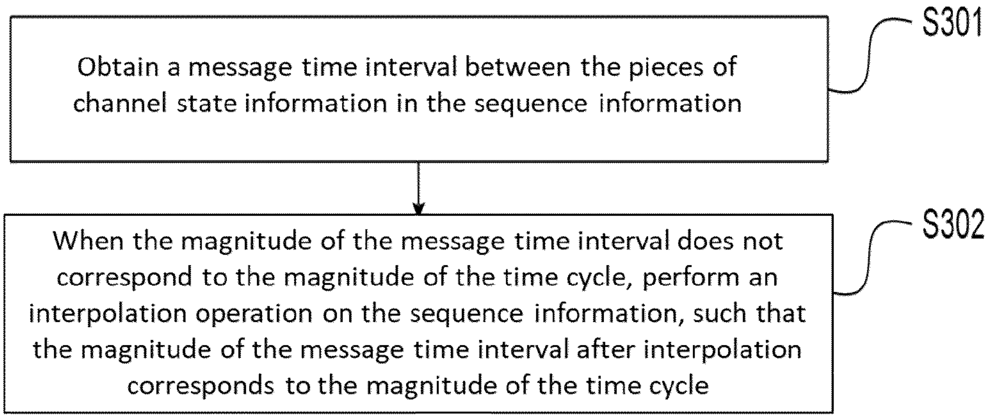
S301
Obtain a message time interval between the pieces of channel state information in the sequence information
S302
When the magnitude of the message time interval does not correspond to the magnitude of the time cycle, perform an interpolation operation on the sequence information, such that the magnitude of the message time interval after interpolation corresponds to the magnitude of the time cycle

FIG.5

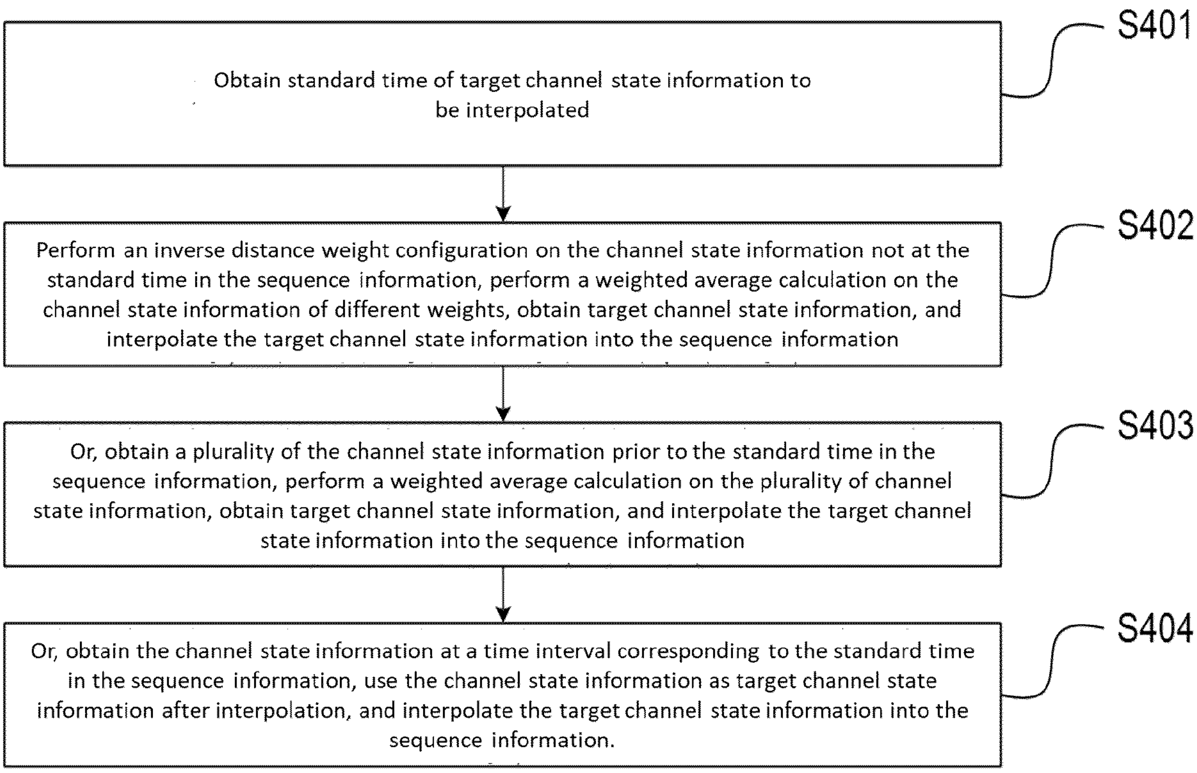
S401
Obtain standard time of target channel state information to be interpolated
S402
Perform an inverse distance weight configuration on the channel state information not at the standard time in the sequence information, perform a weighted average calculation on the channel state information of different weights, obtain target channel state information, and interpolate the target channel state information into the sequence information
S403
Or, obtain a plurality of the channel state information prior to the standard time in the sequence information, perform a weighted average calculation on the plurality of channel state information, obtain target channel state information, and interpolate the target channel state information into the sequence information
S404
Or, obtain the channel state information at a time interval corresponding to the standard time in the sequence information, use the channel state information as target channel state information after interpolation, and interpolate the target channel state information into the sequence information.

FIG.6

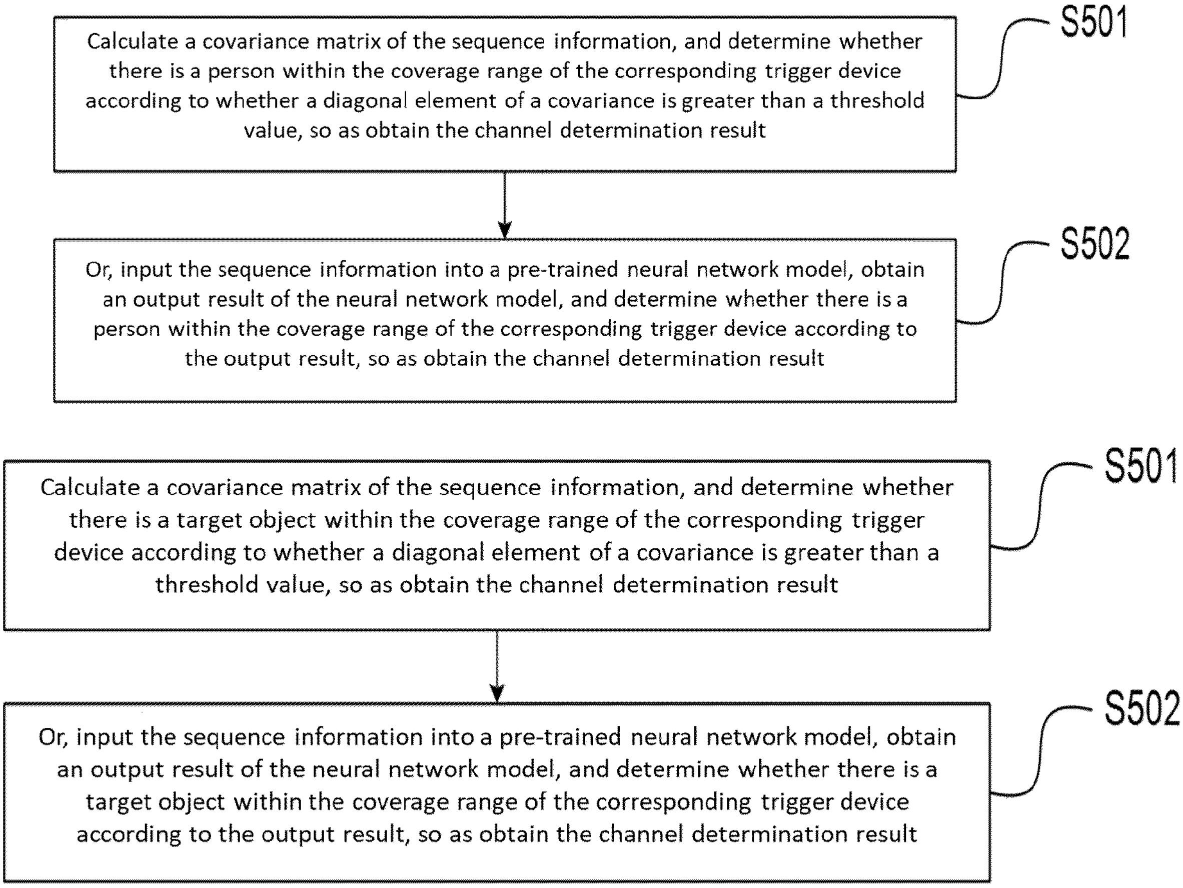
Calculate a covariance matrix of the sequence information, and determine whether there is a person within the coverage range of the corresponding trigger device according to whether a diagonal element of a covariance is greater than a threshold value, so as obtain the channel determination result
S501
Or, input the sequence information into a pre-trained neural network model, obtain an output result of the neural network model, and determine whether there is a person within the coverage range of the corresponding trigger device according to the output result, so as obtain the channel determination result
S502
Calculate a covariance matrix of the sequence information, and determine whether there is a target object within the coverage range of the corresponding trigger device according to whether a diagonal element of a covariance is greater than a threshold value, so as obtain the channel determination result
S501
Or, input the sequence information into a pre-trained neural network model, obtain an output result of the neural network model, and determine whether there is a target object within the coverage range of the corresponding trigger device according to the output result, so as obtain the channel determination result
S502

FIG.7

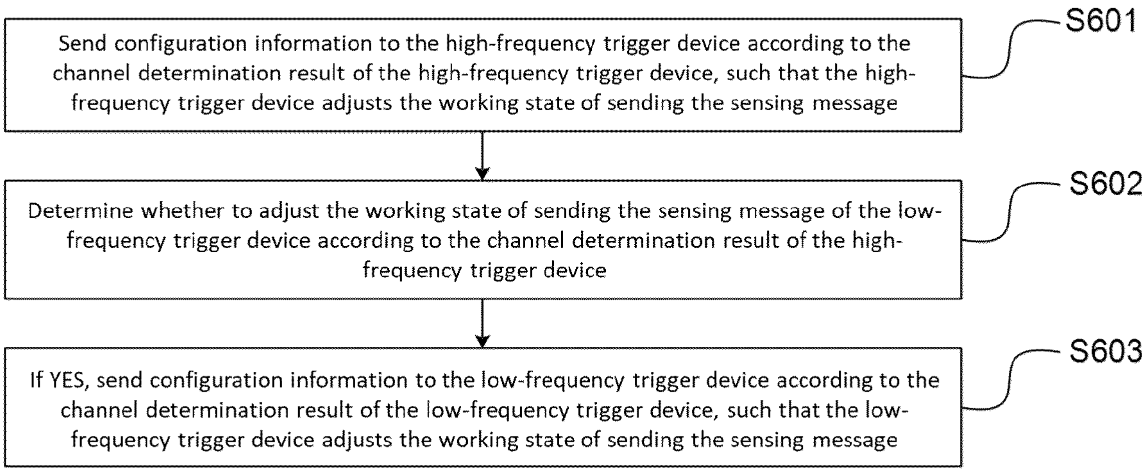
Send configuration information to the high-frequency trigger device according to the channel determination result of the high-frequency trigger device, such that the high-frequency trigger device adjusts the working state of sending the sensing message
S601
Determine whether to adjust the working state of sending the sensing message of the low-frequency trigger device according to the channel determination result of the high-frequency trigger device
S602
If YES, send configuration information to the low-frequency trigger device according to the channel determination result of the low-frequency trigger device, such that the low-frequency trigger device adjusts the working state of sending the sensing message
S603

FIG.8

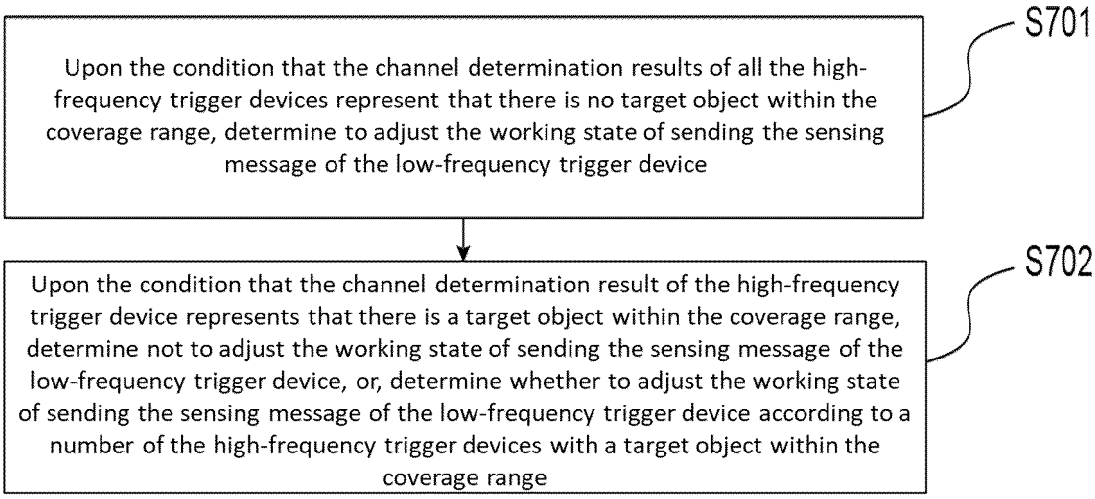
Upon the condition that the channel determination results of all the high-frequency trigger devices represent that there is no target object within the coverage range, determine to adjust the working state of sending the sensing message of the low-frequency trigger device
S701
Upon the condition that the channel determination result of the high-frequency trigger device represents that there is a target object within the coverage range, determine not to adjust the working state of sending the sensing message of the low-frequency trigger device, or, determine whether to adjust the working state of sending the sensing message of the low-frequency trigger device according to a number of the high-frequency trigger devices with a target object within the coverage range
S702

FIG.9

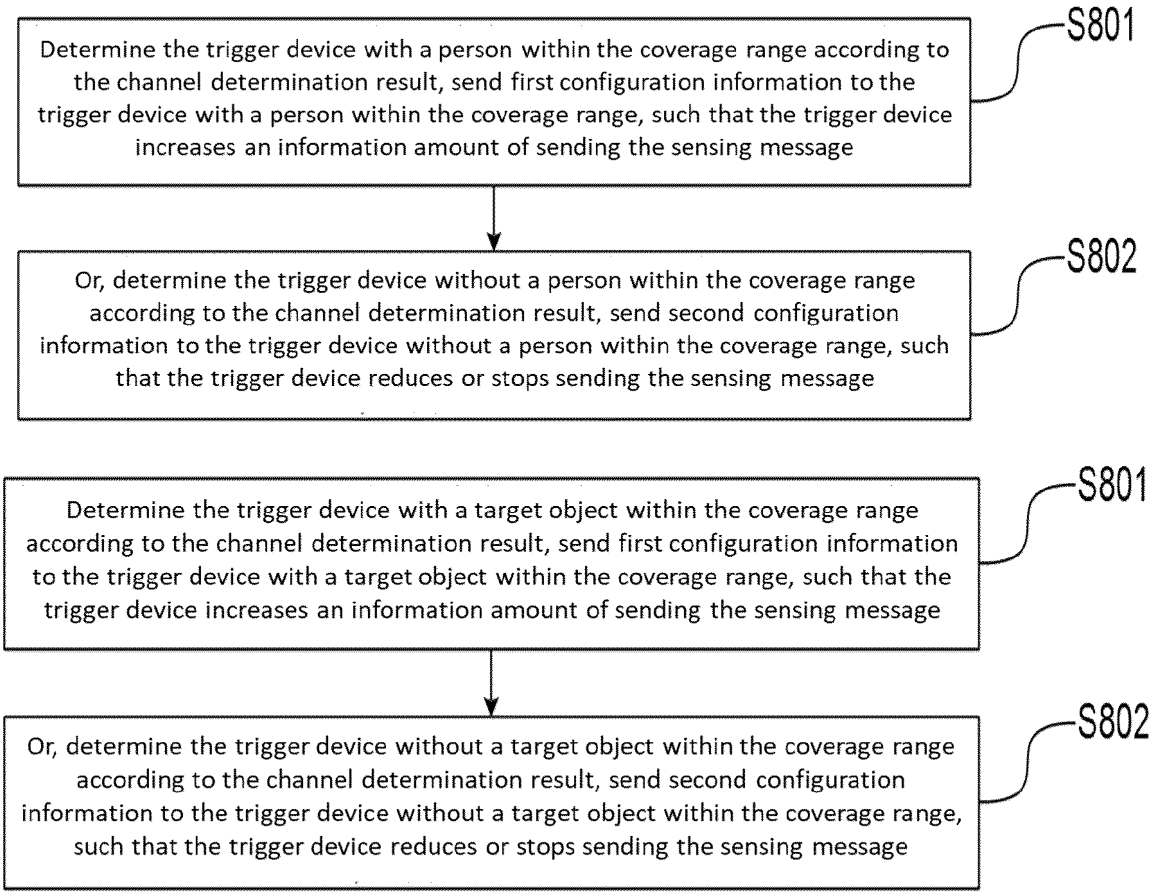
Determine the trigger device with a person within the coverage range according to the channel determination result, send first configuration information to the trigger device with a person within the coverage range, such that the trigger device increases an information amount of sending the sensing message
S801
Or, determine the trigger device without a person within the coverage range according to the channel determination result, send second configuration information to the trigger device without a person within the coverage range, such that the trigger device reduces or stops sending the sensing message
S802
Determine the trigger device with a target object within the coverage range according to the channel determination result, send first configuration information to the trigger device with a target object within the coverage range, such that the trigger device increases an information amount of sending the sensing message
S801
Or, determine the trigger device without a target object within the coverage range according to the channel determination result, send second configuration information to the trigger device without a target object within the coverage range, such that the trigger device reduces or stops sending the sensing message
S802

FIG.10

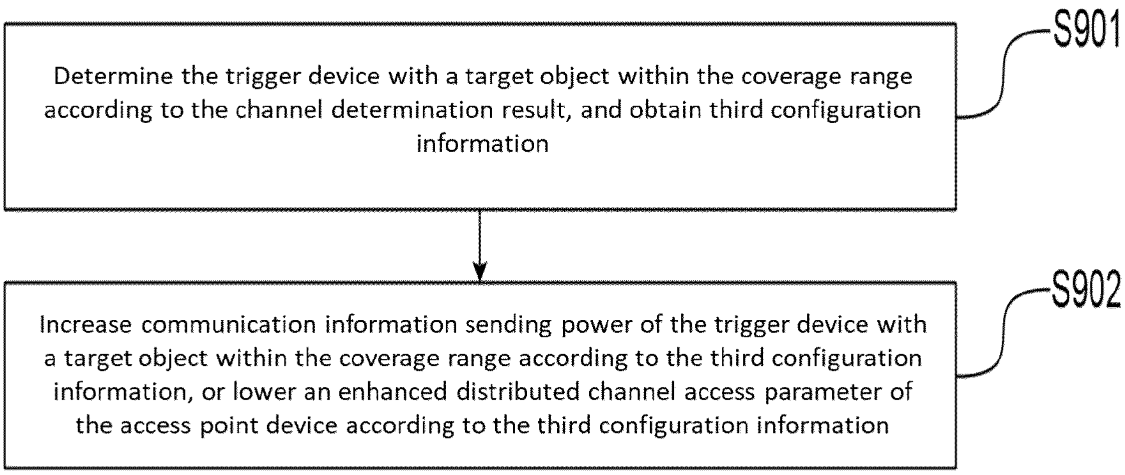
S901
Determine the trigger device with a target object within the coverage range according to the channel determination result, and obtain third configuration information
S902
Increase communication information sending power of the trigger device with a target object within the coverage range according to the third configuration information, or lower an enhanced distributed channel access parameter of the access point device according to the third configuration information

FIG.11

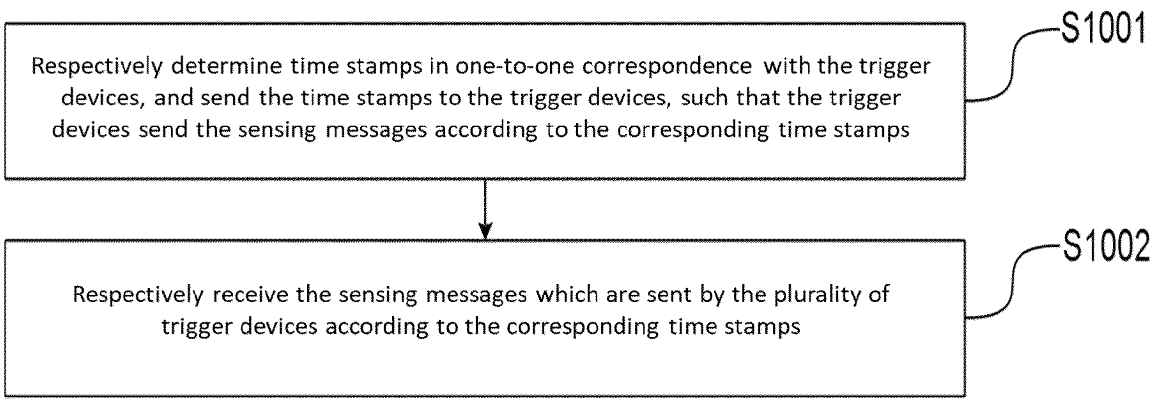
S1001
Respectively determine time stamps in one-to-one correspondence with the trigger devices, and send the time stamps to the trigger devices, such that the trigger devices send the sensing messages according to the corresponding time stamps
S1002
Respectively receive the sensing messages which are sent by the plurality of trigger devices according to the corresponding time stamps

FIG.12

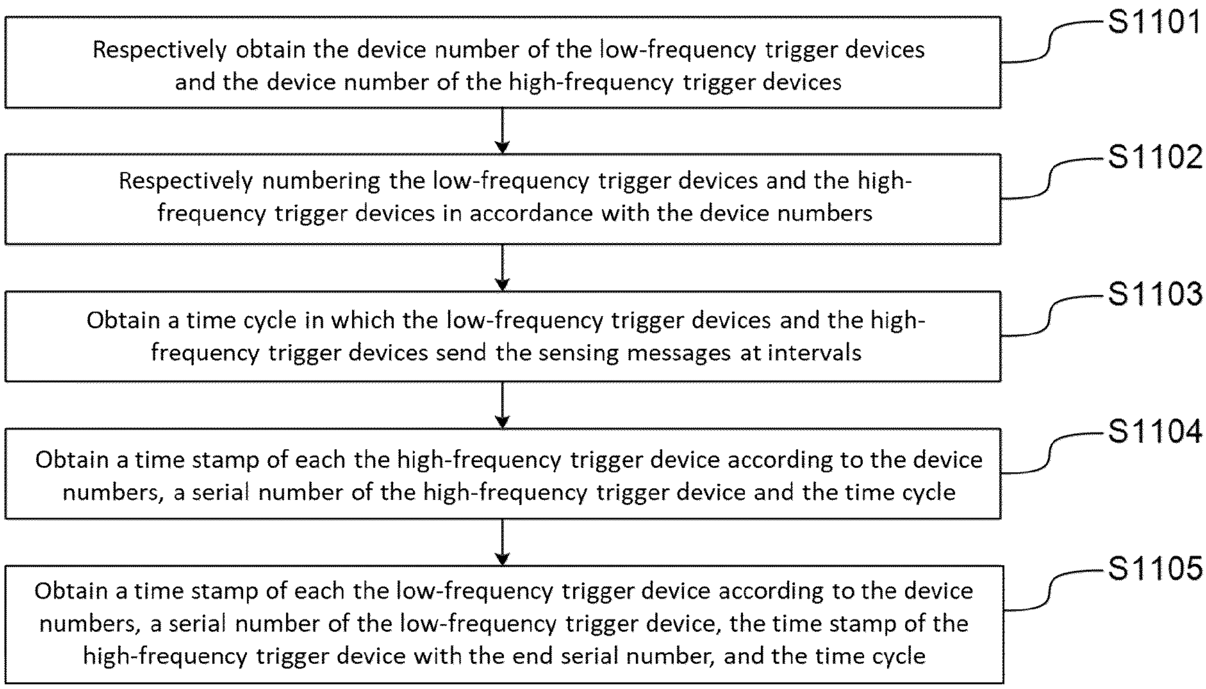
S1101
Respectively obtain the device number of the low-frequency trigger devices and the device number of the high-frequency trigger devices
S1102
Respectively numbering the low-frequency trigger devices and the high-frequency trigger devices in accordance with the device numbers
S1103
Obtain a time cycle in which the low-frequency trigger devices and the high-frequency trigger devices send the sensing messages at intervals
S1104
Obtain a time stamp of each the high-frequency trigger device according to the device numbers, a serial number of the high-frequency trigger device and the time cycle
S1105
Obtain a time stamp of each the low-frequency trigger device according to the device numbers, a serial number of the low-frequency trigger device, the time stamp of the high-frequency trigger device with the end serial number, and the time cycle

FIG.13

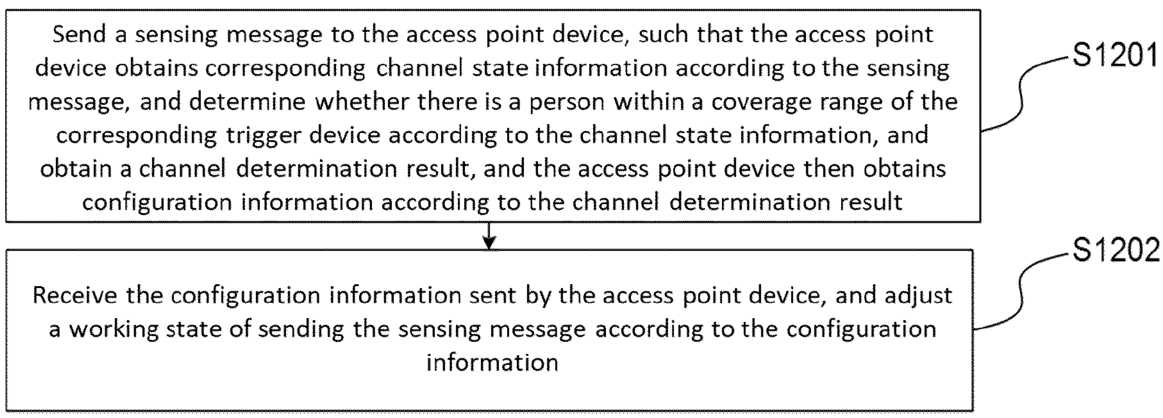
Send a sensing message to the access point device, such that the access point device obtains corresponding channel state information according to the sensing message, and determine whether there is a person within a coverage range of the corresponding trigger device according to the channel state information, and obtain a channel determination result, and the access point device then obtains configuration information according to the channel determination result
S1201
Receive the configuration information sent by the access point device, and adjust a working state of sending the sensing message according to the configuration information
S1202

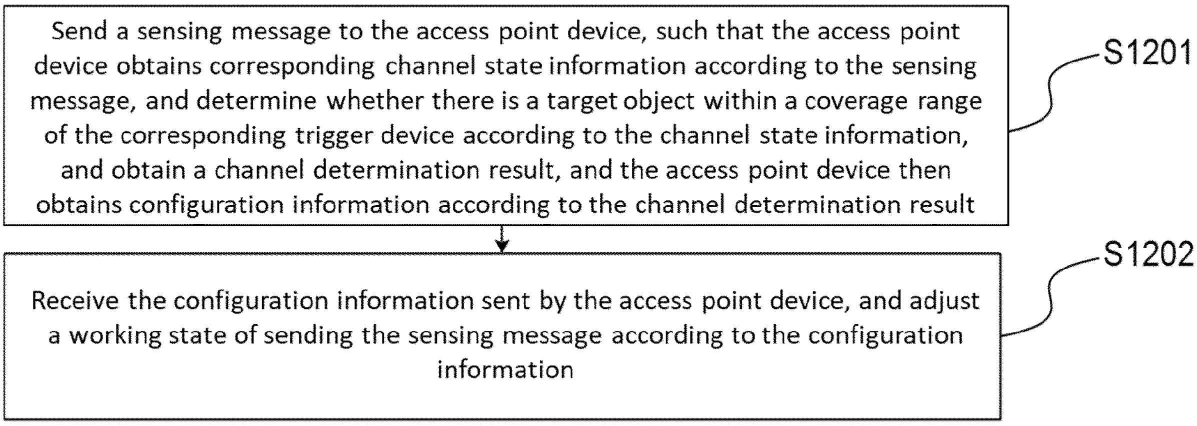
Send a sensing message to the access point device, such that the access point device obtains corresponding channel state information according to the sensing message, and determine whether there is a target object within a coverage range of the corresponding trigger device according to the channel state information, and obtain a channel determination result, and the access point device then obtains configuration information according to the channel determination result
S1201
Receive the configuration information sent by the access point device, and adjust a working state of sending the sensing message according to the configuration information
S1202

FIG.14

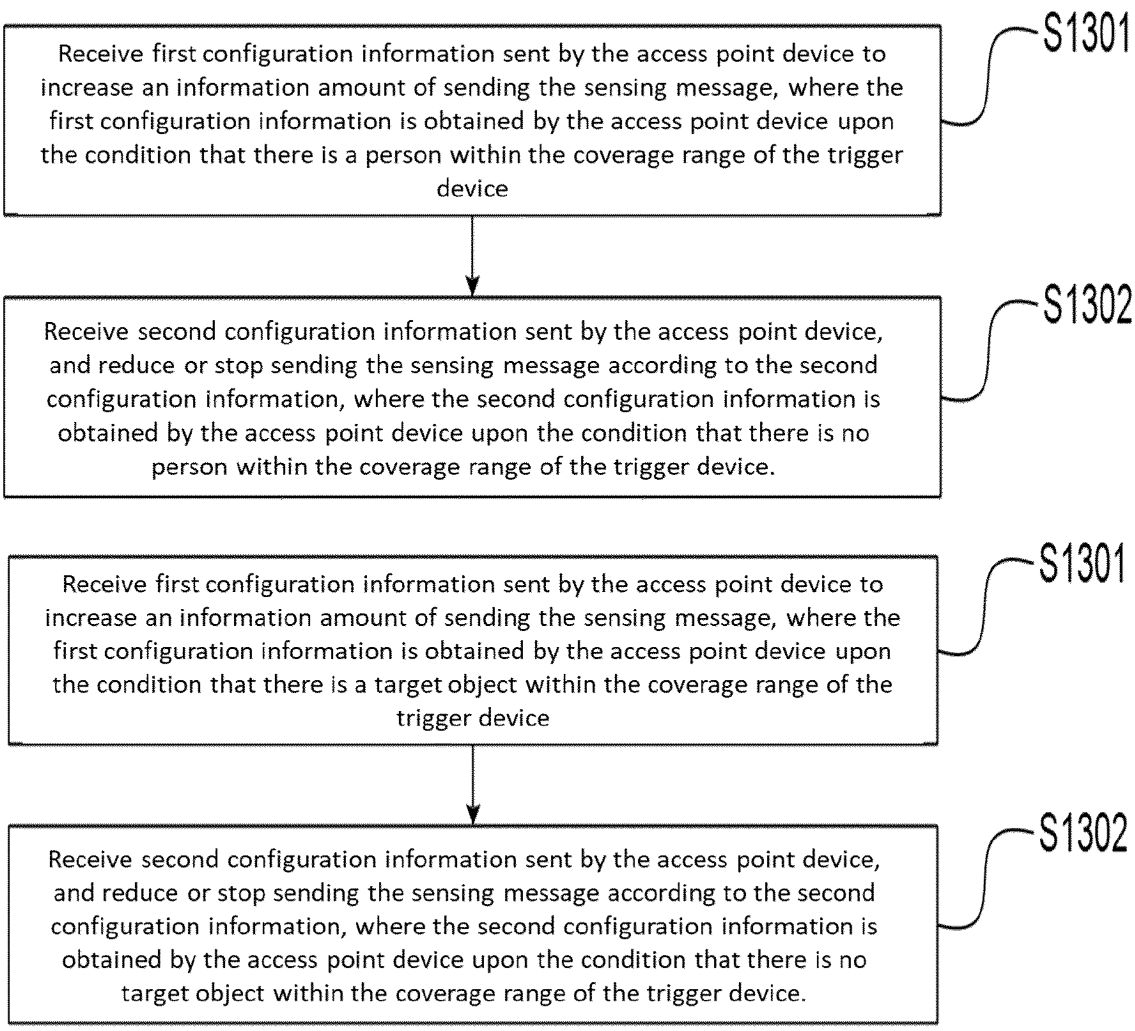
Receive first configuration information sent by the access point device to increase an information amount of sending the sensing message, where the first configuration information is obtained by the access point device upon the condition that there is a person within the coverage range of the trigger device
S1301
Receive second configuration information sent by the access point device, and reduce or stop sending the sensing message according to the second configuration information, where the second configuration information is obtained by the access point device upon the condition that there is no person within the coverage range of the trigger device.
S1302
Receive first configuration information sent by the access point device to increase an information amount of sending the sensing message, where the first configuration information is obtained by the access point device upon the condition that there is a target object within the coverage range of the trigger device
S1301
Receive second configuration information sent by the access point device, and reduce or stop sending the sensing message according to the second configuration information, where the second configuration information is obtained by the access point device upon the condition that there is no target object within the coverage range of the trigger device.
S1302

FIG.15

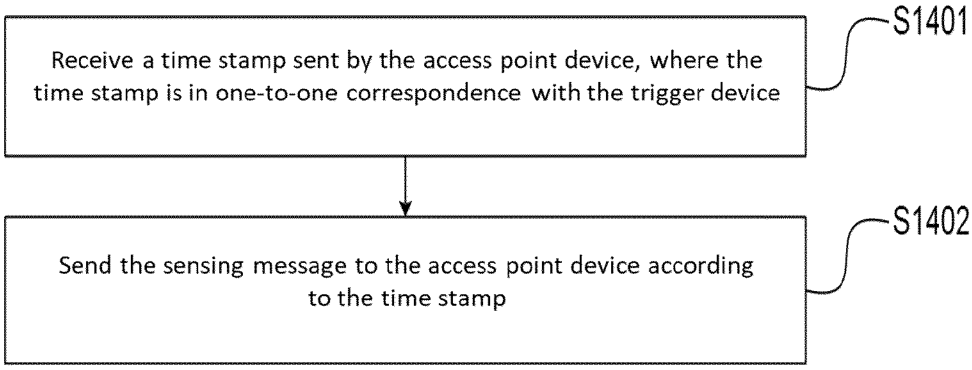
Receive a time stamp sent by the access point device, where the time stamp is in one-to-one correspondence with the trigger device
S1401
Send the sensing message to the access point device according to the time stamp
S1402

FIG.16

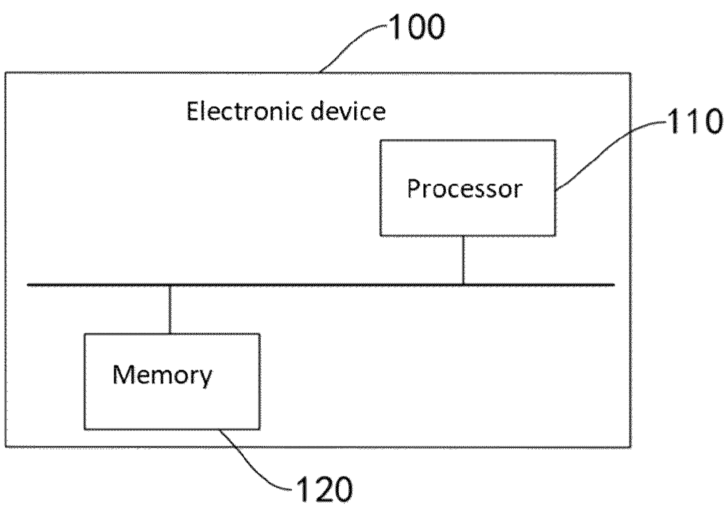
100
Electronic device
110
Processor
Memory
120

FIG.17

**INTERNATIONAL SEARCH REPORT**

International application No.
**PCT/CN2023/100242**

**A. CLASSIFICATION OF SUBJECT MATTER**

H04W 52/02(2009.01)i

According to International Patent Classification (IPC) or to both national classification and IPC

**B. FIELDS SEARCHED**

Minimum documentation searched (classification system followed by classification symbols)

IPC: H04W,H04B

Documentation searched other than minimum documentation to the extent that such documents are included in the fields searched

Electronic data base consulted during the international search (name of data base and, where practicable, search terms used)

CNTXT; ENTXTC; ENTXT; VEN; DWPI; IEEE; 3GPP: 感知, 感测, 信道状态信息, 报文, 目标, 触发, 范围, sensing, measure, CSI, message, target, trigger, coverage

**C. DOCUMENTS CONSIDERED TO BE RELEVANT**

| Category* | Citation of document, with indication, where appropriate, of the relevant passages | Relevant to claim No. |
|---|---|---|
| X | CN 113115415 A (HUAWEI TECHNOLOGIES CO., LTD.) 13 July 2021 (2021-07-13) description, paragraphs [0118]-[0282], and figures 1-25 | 1-24 |
| A | CN 108174406 A (NEW H3C TECHNOLOGIES CO., LTD.) 15 June 2018 (2018-06-15) entire document | 1-24 |
| A | CN 113747461 A (HUAWEI TECHNOLOGIES CO., LTD.) 03 December 2021 (2021-12-03) entire document | 1-24 |
| A | CN 114513608 A (SHENZHEN MERCURY COMMUNICATION TECHNOLOGY CO., LTD.) 17 May 2022 (2022-05-17) entire document | 1-24 |
| A | WO 2022032425 A1 (QUALCOMM INC. et al.) 17 February 2022 (2022-02-17) entire document | 1-24 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 September 2023** | **14 September 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/100242**

| Patent document cited in search report | Publication date (day/month/year) | Patent family member(s) | Publication date (day/month/year) |
|---|---|---|---|
| CN 113115415 A | 13 July 2021 | WO 2021139736 A1 | 15 July 2021 |
| | | US 2022345188 A1 | 27 October 2022 |
| CN 108174406 A | 15 June 2018 | None | |
| CN 113747461 A | 03 December 2021 | WO 2021244353 A1 | 09 December 2021 |
| | | EP 4156556 A1 | 29 March 2023 |
| CN 114513608 A | 17 May 2022 | None | |
| WO 2022032425 A1 | 17 February 2022 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202210734436